# EUROPEAN PATENT APPLICATION

(11) **EP 4 779 744 A1**
(43) Date of publication of application: **22.07.2026**
(21) Application number: 23952203.0
(22) Date of filing: 12.09.2023
(51) Int. Cl.: H01M 10/0568, H01M 4/505, H01M 4/525, H01M 10/0567, H01M 10/0569

(54) **ELECTROLYTE FOR LITHIUM SECONDARY BATTERY AND LITHIUM SECONDARY BATTERY**

(71) Applicant: TERAWATT TECHNOLOGY K.K., Yokohama-shi, Kanagawa 226-0026 (JP)
(72) Inventor: TAKIMOTO, Kazuki, Yokohama-shi, Kanagawa 226-0026 (JP); OYAMA, Gosuke, Yokohama-shi, Kanagawa 226-0026 (JP)
(74) Representative: FRKelly
(86) International application number: PCT/JP2023/033254
(87) International publication number: WO 2025/057309

(57) **Abstract**

The present invention provides an electrolyte solution for a lithium secondary battery, which enables all of high energy density, favorable cycle characteristics, favorable storage stability at a high temperature, and excellent charging/discharging characteristics. The present invention relates to an electrolyte solution for a lithium secondary battery, which contains an ether having no fluorine atom, a hydrofluoroether, an additive which is a compound having a cyano group, and lithium bis(fluorosulfonyl)imide.

## Description

### Technical Field

The present invention relates to an electrolyte solution for a lithium secondary battery and a lithium secondary battery.

### Background Art

In recent years, the technique of converting natural energy such as solar light and wind power into electric energy has attracted attention. Under such a situation, various secondary batteries have been developed as a power storage device which is highly safe and is able to store a lot of electric energy.

Among the above, a lithium secondary battery which carries out charging/discharging by transferring lithium ions between a positive electrode and a negative electrode is known to exhibit a high voltage and a high energy density. As a typical lithium secondary battery, a lithium-ion secondary battery (lithium-ion battery: LIB) which has a positive electrode and a negative electrode having an active material capable of retaining a lithium element, and is subjected to charging/discharging by transferring or receiving lithium ions between a positive-electrode active material and a negative-electrode active material is known.

In addition, for the purpose of realizing a high energy density and improving productivity, a lithium secondary battery (lithium metal battery: LMB) that uses lithium metal, instead of a material as a negative-electrode active material such as a carbon material, into which lithium ions can be inserted, or a lithium secondary battery (anode-free battery: AFB) that uses a negative electrode consisting of a negative electrode current collector not having a negative-electrode active material such as a carbon material or lithium metal, has been developed.

On the other hand, in a lithium secondary battery capable of achieving a high voltage, there is such a problem that the cycle characteristics of the lithium secondary battery deteriorate due to high reactivity between a member of the battery and an electrolyte solution. Specifically, when the battery is repeatedly charged/discharged, the electrolyte solution is consumed, and the battery capacity decreases. As a result, there is a demand for a measure for preventing such a decrease in the battery capacity.

For example, Patent Literature 1 discloses a lithium battery including a positive electrode containing a lithium transition metal oxide which has a layered structure and has undergone over-lithiation; a negative electrode containing a silicon-based negative-electrode active material; and an electrolyte interposed between the positive electrode and the negative electrode, the electrolyte containing 3% by volume or more of a fluorine-based ether solvent with respect to a total volume of a non-aqueous electrolyte solution.

In addition, Patent Literature 2 discloses a lithium metal battery including a lithium metal negative electrode, a positive electrode, and a liquid electrolyte disposed between the lithium metal negative electrode and the positive electrode, where the liquid electrolyte contains a specific cation, an anion, and an organic solvent.

### Citation List

### Patent Literatures

Patent Literature 1: Japanese Patent No. 6511222
Patent Literature 2: European Patent No. 3151314

### Summary of Invention

### Technical Problem

However, it is difficult to provide a lithium secondary battery having both favorable cycle characteristics and favorable storage stability at a high temperature with the electrolyte solution for a lithium secondary battery in the related art.

The present invention has been made in consideration of the above-described problems, and an object of the present invention is to provide an electrolyte solution which achieves both favorable cycle characteristics and favorable storage stability at a high temperature in a lithium secondary battery, and a lithium secondary battery that uses the electrolyte solution.

### Solution to Problem

An electrolyte solution for a lithium secondary battery according to an embodiment of the present invention contains an ether having no fluorine atom; a hydrofluoroether; an additive which is a compound having a cyano group; and lithium bis(fluorosulfonyl)imide.

The inventors of the present invention have found that, when the electrolyte solution for a lithium secondary battery contains an ether having no fluorine atom, a hydrofluoroether, and lithium bis(fluorosulfonyl)imide, a reaction between the active material of the lithium secondary battery and the electrolyte solution is suppressed, the cycle life is improved, and the gas generation during storage at a high temperature can be reduced by carrying out mixing with an additive which is a compound having a cyano group.

In the electrolyte solution for a lithium secondary battery according to one embodiment of the present invention, the compound containing a cyano group is preferably at least one selected from the group consisting of adiponitrile, succinonitrile, glutaronitrile, and 1,3,6-hexanetricarbonitrile. According to such an aspect, the lithium secondary battery tends to have more excellent cycle characteristics and storage stability at a high temperature. By carrying out mixing with such a compound containing a cyano group as an additive, a reaction between the active material of the lithium secondary battery and the electrolyte solution is suppressed, the cycle life is improved, and the gas generation during storage at a high temperature can be reduced.

In the electrolyte solution for a lithium secondary battery according to one embodiment of the present invention, the compound containing a cyano group is a compound containing a cyano group and having an unsaturated bond between carbon atoms. The compound containing a cyano group and having an unsaturated bond between carbon atoms is preferably at least one selected from the group consisting of tetracyanoethylene, isopropylidene malononitrile, fumaronitrile, and 3-hexenedinitrile. By carrying out mixing with such a compound containing a cyano group and having an unsaturated bond between carbon atoms as an additive, a reaction between the active material of the lithium secondary battery and the electrolyte solution is suppressed, the cycle life is improved, and the gas generation during storage at a high temperature can be reduced.

In the electrolyte solution for a lithium secondary battery according to one embodiment of the present invention, a product (A x B) of a value A (g/Ah) obtained by dividing an amount (g) of the electrolyte solution injected into a battery by a battery capacity (Ah) and a content B (parts by mass) of the additive with respect to 100 parts by mass of the electrolyte solution is preferably 0.10 or more and 9.5 or less. According to such an aspect, the lithium secondary battery tends to have more excellent cycle characteristics and storage stability at a high temperature.

In the electrolyte solution for a lithium secondary battery according to one embodiment of the present invention, the ether having no fluorine atom preferably includes at least one selected from the group consisting of 1,2-dimethoxyethane, 1,2-diethoxyethane, and 1,2-dimethoxypropane. According to such an aspect, the lithium secondary battery tends to have more excellent cycle characteristics and charging/discharging characteristics.

In the electrolyte solution for a lithium secondary battery according to one embodiment of the present invention, the hydrofluoroether includes a chain-like fluorine compound having at least one of a monovalent group represented by Formula (A) or Formula (B). According to such an aspect, the lithium secondary battery tends to have more excellent cycle characteristics and charging/discharging characteristics. In addition, in Formulae (A) and (B), a wavy line represents a bonding site in the monovalent group. 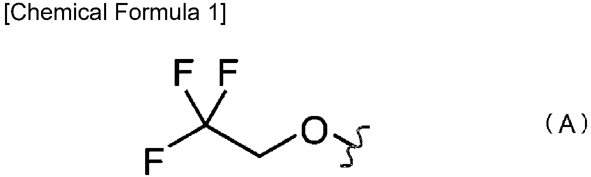 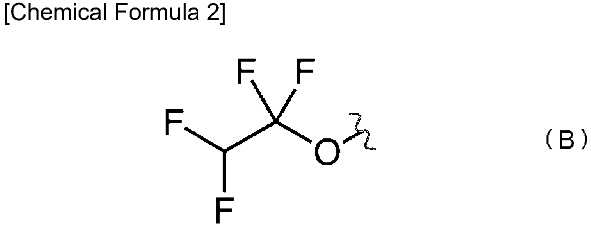 (In Formulae (A) and (B), a wavy line represents a bonding site in the monovalent group.)

The electrolyte solution for a lithium secondary battery according to one embodiment of the present invention preferably contains a cyclic compound represented by Formula (1). According to such an aspect, the lithium secondary battery tends to be more excellent in energy density, cycle characteristics, and charging/discharging characteristics. 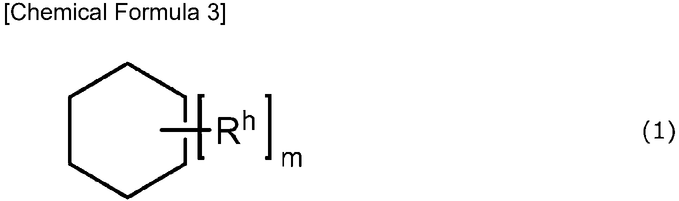 (In Formula (1), m is an integer of 0 or more and 3 or less, and R^{h} is a monovalent saturated hydrocarbon group having 1 or more and 10 or less carbon atoms.)

In the electrolyte solution for a lithium secondary battery according to one embodiment of the present invention, the cyclic compound preferably includes at least one selected from the group consisting of cyclohexane, methylcyclohexane, and ethylcyclohexane. According to such an aspect, the lithium secondary battery tends to be more excellent in energy density, cycle characteristics, and charging/discharging characteristics.

The lithium secondary battery according to one embodiment of the present invention includes any one of the above-described electrolyte solutions, in which charging/discharging is carried out by depositing a lithium metal on a surface of a negative electrode and dissolving the deposited lithium metal. According to such an aspect, the lithium secondary battery tends to be more excellent in energy density, cycle characteristics, and storage stability at a high temperature.

The lithium secondary battery according to one embodiment of the present invention preferably contains, as a positive-electrode active material, Li_{z}NiₓCo_{y}M_{1-x-y}O_{2+α} (here, 0.5 ≤ x ≤ 1.0, 0 ≤ y ≤ 0.35, 0.9 ≤ z ≤ 1.3, -0.2 ≤ α ≤ 0.15, and M is at least one element selected from Mn, Al, V, Mg, Mo, Nb, Ti, Zr, Fe, Cu, Cr, Zn, F, and B). According to such an aspect, it is possible to more effectively suppress the decomposition of the electrolyte solution occurring on the surface of the positive-electrode active material, and to achieve all of high energy density, favorable cycle characteristics, favorable storage stability at a high temperature, and excellent charging/discharging characteristics.

### Advantageous Effect of Invention

According to the present invention, it is possible to provide an electrolyte solution which achieves both favorable cycle characteristics and favorable storage stability at a high temperature in a lithium secondary battery, and a lithium secondary battery that uses the electrolyte solution.

### Brief Description of Drawings

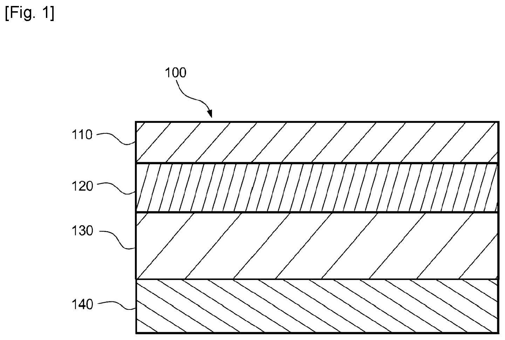

[Figure 1] Figure 1 is a schematic cross-sectional view of a lithium secondary battery according to one embodiment of the present invention.

### Description of Embodiments

Hereinafter, embodiments (hereinafter, referred to as "the present embodiments") for carrying out the present invention will be described in detail with reference to drawings as necessary. However, the present invention is not limited thereto, and various modifications are possible without departing from the gist. It is noted that in the drawings, the same elements will be represented by the same reference numerals, and redundant descriptions thereof will be omitted. In addition, unless otherwise specifically described, the positional relationship such as vertical or horizontal one will be based on the positional relationship shown in the drawings. Further, the dimensional ratios in the drawings are not limited to the depicted ratios.

### 1. Electrolyte solution

In the present specification, the electrolyte solution means a solution containing an electrolyte and a solvent and having ion conductivity. In the lithium secondary battery, the electrolyte solution acts as a conduction path for lithium ions. In the lithium secondary battery, the electrolyte solution may be infiltrated into the separator, may be used in a form of being sealed in an airtight container together with a laminate of the positive electrode, the separator, and the negative electrode, or may be used as a material of a member with which the separator is filled.

An electrolyte solution for a lithium secondary battery according to the present embodiment (hereinafter, also simply referred to as an "electrolyte solution") contains an ether having no fluorine atom; a hydrofluoroether; an additive which is a compound having a cyano group; and lithium bis(fluorosulfonyl)imide.

The inventors of the present invention have found that, when the electrolyte solution for a lithium secondary battery contains an ether having no fluorine atom, a hydrofluoroether, and lithium bis(fluorosulfonyl)imide, a reaction between the active material of the lithium secondary battery and the electrolyte solution is suppressed, the cycle life is improved, and the gas generation during storage at a high temperature can be reduced by carrying out mixing with an additive which is a compound having a cyano group.

In the lithium secondary battery, when discharge or charge is carried out, an oxidation or reduction reaction of lithium proceeds, making it possible to extract or store energy. In this case, a decomposition reaction of the electrolyte solution generally occurs more easily than an oxidation-reduction reaction of lithium, and thus the irreversible decomposition of the electrolyte solution may cause the volume expansion of the battery each time a charge/discharge cycle is carried out. In addition, as a result, the depletion of the electrolyte solution (dry-up state) in which the electrode is not filled with the electrolyte solution occurs, and the capacity of the battery may decrease. Such volume expansion of the battery, depletion of the electrolyte solution, and the like can be prevented by controlling the properties of the solid electrolyte interface layer (SEI layer) formed on the surface of the negative electrode or the like by charging/discharging the lithium secondary battery. It is presumed that the electrolyte solution according to the present embodiment is able to form a high-quality SEI layer in a lithium secondary battery. In addition, the electrolyte solution according to the present embodiment is able to make a lithium secondary battery have improved cycle characteristics, improved storage stability at a high temperature, improved energy density, and improved charging/discharging characteristics.

The hydrofluoroether is a compound containing fluorine and hydrogen, and further containing an ether bond. Since the hydrofluoroether contains a fluorine and an ether bond, a reaction is likely to occur on the surface of the negative electrode during charging/discharging of the lithium secondary battery. As a result, it is presumed that in the lithium secondary battery containing the electrolyte solution according to the present embodiment, the hydrofluoroether is preferentially decomposed during the first charging, and an SEI layer having a high fluorine content is suitably formed. It is presumed that such an SEI layer suppresses further decomposition of components in the electrolyte solution, and suppresses irreversible reduction and the like of lithium ions in the lithium secondary battery.

In addition, in the electrolyte solution according to the present embodiment, the ether having no fluorine atom further improves the solubility of the lithium salt in the electrolyte solution. As a result, it is presumed that the internal resistance of the lithium secondary battery containing the electrolyte solution is reduced, and the properties of the formed SEI layer are suitable.

In addition, it is presumed that in the electrolyte solution according to the present embodiment, the lithium bis(fluorosulfonyl)imide improves the cycle characteristics and the charging/discharging characteristics of the battery. This is presumed to be because the lithium bis(fluorosulfonyl)imide has high stability of a counter ion of a lithium ion.

In addition, by adding the additive which is a compound having a cyano group to the electrolyte solution according to the present embodiment, the cycle characteristics are improved, and the gas generation during storage at a high temperature can be reduced. This is presumed to be because the additive is decomposed in the vicinity of the positive electrode, and a decomposition product generated by the decomposition is present as a coating film in the vicinity of the positive electrode, whereby the reaction between the positive-electrode active material and the electrolyte solution is suppressed.

In addition, even when the adding amount of the additive is small, the cycle characteristics are sufficiently improved, and the gas generation during storage at a high temperature can be reduced. This is presumed to be because the cyclic compound and the hydrofluoroether have high oxidation stability, and the additive is less likely to dissolve in the cyclic compound and the hydrofluoroether, and thus sufficient decomposition products are generated in order to suppress the reaction between the positive-electrode active material and the electrolyte solution in the vicinity of the positive electrode even when a small amount of the additive is used.

Therefore, it is considered that the lithium secondary battery containing the electrolyte solution according to the present embodiment is able to achieve all of high energy density, favorable cycle characteristics, favorable storage stability at a high temperature, and excellent charging/discharging characteristics as the synergistic effect due to the characteristics of each of the above-described components. The factor is, however, not limited to the aforesaid one.

A specific gravity of the electrolyte solution according to the present embodiment is preferably 1.10 g/cc or more and 1.50 g/cc or less. When the specific gravity of the electrolyte solution according to the present embodiment is within the above-described range, the energy density of the lithium secondary battery using such an electrolyte solution is improved.

Hereinafter, each component contained in the electrolyte solution will be described in detail.

### 1.1. Solvent

### 1.1.1. Ether having no fluorine atom

The electrolyte solution according to the present embodiment includes an ether having no fluorine atom (hereinafter also referred to as a "non-fluorinated ether").

The number of carbon atoms in the non-fluorinated ether contained in the electrolyte solution according to the present embodiment is not particularly limited; however, it is, for example, 2 or more and 20 or less. From the viewpoint of further improving the effect of the present embodiment due to the electrolyte solution, the number of carbon atoms in the non-fluorinated ether is preferably 3 or more and 15 or less, 4 or more and 12 or less, and 5 or more and 10 or less.

The number of ether bonds in the non-fluorinated ether is not particularly limited; however, it is, for example, 1 or more and 10 or less. From the viewpoint of further improving the solubility of the electrolyte in the electrolyte solution, the number of ether bonds in the non-fluorinated ether is preferably 2 or more, 3 or more, 8 or less, and 5 or less.

The non-fluorinated ether may be a saturated ether compound (that is, a compound not containing an unsaturated bond) or may be an unsaturated ether compound (that is, a compound containing an unsaturated bond). From the viewpoint of further improving the effect of the present embodiment due to the electrolyte solution, it is preferable that the electrolyte solution contains a saturated non-fluorinated ether.

The non-fluorinated ether may be a chain-like ether compound or may be a cyclic ether compound. From the viewpoint of further improving the effect of the present embodiment due to the electrolyte solution, it is preferable that the electrolyte solution contains a chain-like non-fluorinated ether. The chain-like non-fluorinated ether may be linear or branched.

The non-fluorinated ether contained in the electrolyte solution according to the present embodiment is not particularly limited; however, examples thereof include 1,2-dimethoxyethane (DME), 1,2-diethoxyethane (DEE), 1,2-dimethoxypropane (DMP), diethylene glycol dimethyl ether, triethylene glycol dimethyl ether, tetraethylene glycol dimethyl ether, 1,3-dimethoxypropane, 1,4-dimethoxybutane, 1,1-dimethoxyethane, 2,2-dimethoxypropane, 1,3-dimethoxybutane, 1,2-dimethoxybutane, 2,2-dimethoxybutane, 2,3-dimethoxybutane, 1,2-diethoxypropane, 1,2-diethoxybutane, 2,3-diethoxybutane, and the like. From the viewpoint of further improving the effect of the present embodiment by the electrolyte solution, the non-fluorinated ether is preferably 1,2-dimethoxyethane, 1,2-diethoxyethane, 1,2-dimethoxypropane, or a mixture thereof, and more preferably 1,2-dimethoxyethane or 1,2-dimethoxypropane. The non-fluorinated ether may be used alone or in a combination of two or more kinds thereof.

The content of the non-fluorinated ether contained in the electrolyte solution is not particularly limited; however, it is, for example, 1.0% by volume or more and 70.0% by volume or less, preferably 5.0% by volume or more and 65.0% by volume or less, 10.0% by volume or more and 60.0% by volume or less, 15.0% by volume or more and 55.0% by volume or less, and 20.0% by volume or more and 50.0% by volume or less, with respect to the total amount of the solvent component of the electrolyte solution. When the content of the non-fluorinated ether is within the above-described range, the cycle characteristics and the charging/discharging characteristics of the lithium secondary battery containing the electrolyte solution according to the present embodiment tend to be further excellent.

### 1.1.2. Hydrofluoroether

The electrolyte solution according to the present embodiment includes a hydrofluoroether (hereinafter also referred to as an "HFE"). The HFE may be used alone or in a combination of two or more kinds thereof. In addition, in the present specification, the "hydrofluoroether (HFE)" means an ether compound having at least one fluorine atom and hydrogen atoms (preferably an ether compound consisting of only hydrogen atoms, fluorine atoms, oxygen atoms, and carbon atoms).

A molecular weight of the hydrofluoroether (HFE) contained in the electrolyte solution according to the present embodiment is not particularly limited; however, it is, for example, 100 or more and 500 or less. From the viewpoint of making the lithium secondary battery more excellent in stability against a change in environmental temperature, the molecular weight of HFE is preferably 120 or more and 450 or less, 140 or more and 400 or less, 160 or more and 350 or less, and 180 or more and 300 or less.

The number of carbon atoms in HFE is not particularly limited; however, it is, for example, 3 or more and 30 or less. In addition, from the viewpoint of improving the cycle characteristics, the charging/discharging characteristics, and/or the stability of the battery, the number of carbon atoms in the HFE is preferably 4 or more, 5 or more, or 6 or more, and from the same viewpoint, the number of carbon atoms in the HFE is preferably 25 or less, 20 or less, 15 or less, or 10 or less.

HFE may be a chain-like compound or may be a cyclic compound. From the viewpoint of improving the cycle characteristics, the charging/discharging characteristics, and/or the stability of the battery, the electrolyte solution preferably contains a chain-like HFE. The chain-like HFE may be linear or branched.

It is preferable that the HFE contained in the electrolyte solution is a chain-like fluorine compound having at least one of a monovalent group represented by Formula (A) or Formula (B). By using such an electrolyte solution containing HFE, the cycle characteristics and the charging/discharging characteristics of the battery tend to be further improved. In addition, from such a viewpoint, it is preferable that the HFE contained in the electrolyte solution has Formula (B). It is noted that, in Formulae (A) and (B), a wavy line represents a bonding site in the monovalent group.

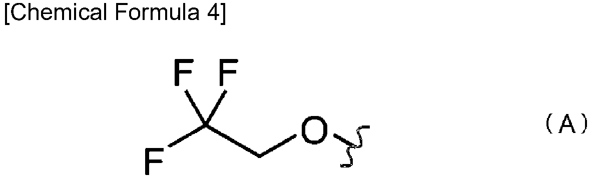

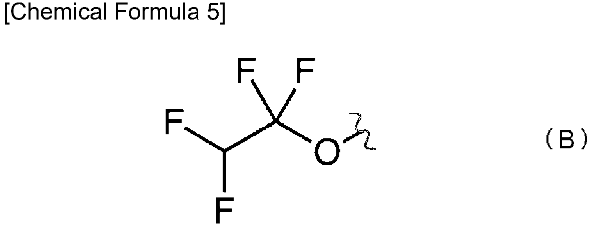

When the HFE contained in the electrolyte solution according to the present embodiment has at least one of the structures represented by Formula (A) or (B), the HFE is more preferably a compound represented by Formula (A') or (B'). By using such an electrolyte solution containing HFE, the cycle characteristics and the charging/discharging characteristics of the battery tend to be further improved. It is noted that, in Formula (A'), R¹ is a saturated or unsaturated monovalent hydrocarbon group which may be fluorinated, and in Formula (B'), R² is a hydrogen atom or an alkyl group, R_{F} is a saturated or unsaturated monovalent hydrocarbon group having a fluorine atom, and m is an integer of 1 or more and 5 or less.

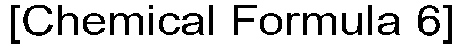

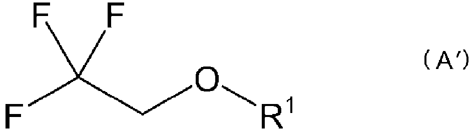

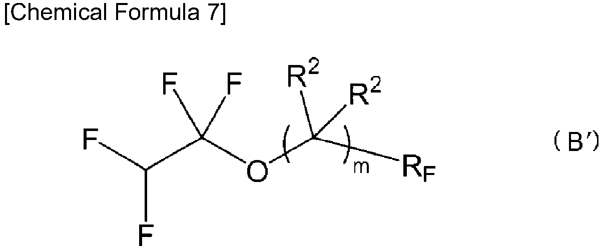

In Formula (A') of the HFE, R¹ is not particularly limited as long as it is a saturated or unsaturated monovalent hydrocarbon group which is fluorinated, and is, for example, a linear or branched alkyl group, alkenyl group, or alkynyl group having 1 to 5 carbon atoms, which may have a fluorine atom. R¹ is preferably a linear or branched alkyl group having 1 to 3 carbon atoms, which has at least one fluorine atom. In addition, the number of fluorine atoms in R¹ is not particularly limited; however, it is, for example, 0 or more and 10 or less, preferably 1 or more and 6 or less, and 2 or more and 5 or less.

From the viewpoint of further improving the effect of the electrolyte solution according to the present embodiment, R¹ is preferably a fluorinated methyl group or a fluorinated ethyl group, more preferably a trifluoromethyl group, a trifluoroethyl group, a tetrafluoroethyl group, or a pentafluoroethyl group, and still more preferably a 1,1,2,2-tetrafluoroethyl group.

In Formula (B') of the HFE, R² is not particularly limited as long as it is a hydrogen atom or an alkyl group. When R² is an alkyl group, the number of carbon atoms thereof is not particularly limited; however, it is, for example, 1 or more and 5 or less, preferably 1 or more and 3 or less, and 1 or more and 2 or less. From the viewpoint of further improving the effect of the present embodiment by the electrolyte solution, it is preferable that R² represents the hydrogen atom.

In Formula (B') of the HFE, m is not particularly limited as long as it is an integer of 1 or more and 5 or less. From the viewpoint of further improving the effect of the present embodiment due to the electrolyte solution, m is preferably 1 or more and 4 or less, 1 or more and 3 or less, and 1 or more and 2 or less.

In Formula (B') of the HFE, R_{F} is not particularly limited as long as it is a saturated or unsaturated monovalent hydrocarbon group which is fluorinated, and is, for example, a linear or branched alkyl group, alkenyl group, or alkynyl group having 1 or more and 5 or less carbon atoms, which has at least one fluorine atom. R_{F} is preferably a linear or branched alkyl group having 1 or more and 5 or less carbon atoms, which has at least one fluorine atom, and more preferably a linear or branched alkyl group having 1 or more and 3 or less carbon atoms, which has at least one fluorine atom. The number of fluorine atoms in R_{F} is not particularly limited as long as it is one or more; however, the number of fluorine atoms is, for example, 1 or more and 10 or less, preferably 1 or more and 5 or less, and 2 or more and 4 or less.

The HFE contained in the electrolyte solution according to the present embodiment is not particularly limited; however, examples thereof include 1,1,2,2-tetrafluoroethyl-2,2,2-trifluoroethyl ether, 1,1,2,2-tetrafluoroethyl-2,2,3,3-tetrafluoropropyl ether, bis(2,2,2-trifluoroethyl)ether, ethyl-1,1,2,2-tetrafluoroethyl ether, methyl-1,1,2,2-tetrafluoroethyl ether, 1H,1H,5H-octafluoropentyl-1,1,2,2-tetrafluoroethyl ether, difluoromethyl-2,2,3,3-tetrafluoropropyl ether, methyl perfluorobutyl ether, ethyl perfluorobutyl ether, and the like. From the viewpoint of further improving the cycle characteristics of a lithium secondary battery having the electrolyte solution according to the present embodiment, 1,1,2,2-tetrafluoroethyl-2,2,2-trifluoroethyl ether or 1,1,2,2-tetrafluoroethyl-2,2,3,3-tetrafluoropropyl ether is preferable as HFE. In addition, HFE may be used alone, or two or more kinds thereof may be used in combination.

A content of the HFE contained in the electrolyte solution is, for example, 10.0% by volume or more and 80.0% by volume or less with respect to a total amount of the solvent components of the electrolyte solution. The content of HFE is preferably 20.0% by volume or more and 75.0% by volume or less. When the content of HFE is within the above-described range, the cycle characteristics and the charging/discharging characteristics of the lithium secondary battery containing the electrolyte solution according to the present embodiment tend to be further excellent.

### 1.1.3. Cyclic compound of Formula (1)

The electrolyte solution according to the present embodiment preferably contains a cyclic compound represented by Formula (1). In addition, when a plurality of saturated hydrocarbon groups is present in the cyclic compound of Formula (1), R^{h}'s in the plurality of saturated hydrocarbon groups are each independently selected. That is, in the present specification, the structures of the plurality of R^{h}'s may be the same or different from each other.

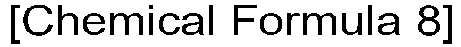

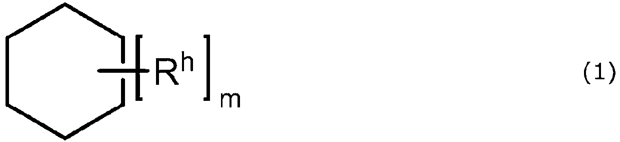

In Formula (1), m is an integer of 0 or more and 3 or less. From the viewpoint of improving the oxidation stability of the electrolyte solution and further improving the cycle characteristics and the charging/discharging characteristics of the lithium secondary battery having the electrolyte solution according to the present embodiment, m is preferably 0 or more and 2 or less, 0 or more and 1 or less, and 1.

In Formula (1), R^{h} may be a chain-like saturated hydrocarbon group or a cyclic saturated hydrocarbon group. From the viewpoint of further improving the effect of the electrolyte solution according to the present embodiment, it is preferable that R^{h} represents a chain-like saturated hydrocarbon group. The chain-like saturated hydrocarbon group may be linear or may have a branched chain. It is noted that, in the present specification, the cyclic saturated hydrocarbon group refers to a saturated hydrocarbon group having at least one cyclic structure.

In Formula (1), the number of carbon atoms in R^{h} is 1 or more and 10 or less. From the viewpoint of further improving the effect due to the electrolyte solution according to the present embodiment, the number of carbon atoms in R^{h} is preferably 1 or more and 8 or less, 1 or more and 5 or less, and 1 or more and 2 or less.

In Formula (1), R^{h} may be linear. According to such an aspect, the cycle characteristics and the charging/discharging characteristics of the lithium secondary battery having the electrolyte solution according to the present embodiment tend to be further improved.

The molecular weight of the cyclic compound of Formula (1) according to the present embodiment is not particularly limited; however, it is, for example, 84 or more and 500 or less. From the viewpoint of further improving the cycle characteristics and the charging/discharging characteristics of the lithium secondary battery having the electrolyte solution according to the present embodiment, the molecular weight of the cyclic compound represented by Formula (1) is preferably 84 or more and 220 or less, 84 or more and 180 or less, and 84 or more and 150 or less.

A specific gravity of the cyclic compound of Formula (1), which is contained in the electrolyte solution at 25°C, is not particularly limited; however, it is, for example, 0.7 g/cc or more and 1.2 g/cc or less. From the viewpoint of further improving the energy density of the lithium secondary battery containing the electrolyte solution, the specific gravity of the cyclic compound of Formula (1) at 25°C is preferably 1.1 g/cc or less, 1.0 g/cc or less, and 0.9 g/cc or less.

The cyclic compound of Formula (1) in the present embodiment is not particularly limited as long as it is a compound represented by Formula (1); however, examples thereof include cyclohexane, methylcyclohexane, ethylcyclohexane, propylcyclohexane, butylcyclohexane, tert-butylcyclohexane, isobutylcyclohexane, 1,4-dimethylcyclohexane, 1,3,5-trimethylcyclohexane, and the like. From the viewpoint of further improving the effect due to the electrolyte solution according to the present embodiment, it is preferable to use one selected from the group consisting of cyclohexane, methylcyclohexane, and ethylcyclohexane as the cyclic compound of Formula (1).

The content of the cyclic compound represented by Formula (1) is preferably 1.0% by volume or more and 40.0% by volume or less, 2.5% by volume or more and 30.0% by volume or less, 5.0% by volume or more and 20.0% by volume or less, 6.0% by volume or more and 17.5% by volume or less, and 7.0% by volume or more and 15.0% by volume or less with respect to the total amount of the solvent component of the electrolyte solution. When the content of the cyclic compound represented by Formula (1) is within the above-described range, the lithium secondary battery containing the electrolyte solution according to the present embodiment tends to be more excellent in energy density, cycle characteristics, and/or charging/discharging characteristics.

### 1.1.4. Other solvents

The electrolyte solution according to the present embodiment may further contain a solvent other than the above-described components. That is, the electrolyte solution according to the present embodiment may contain, for example, a cyclic compound (for example, a heterocyclic compound) other than Formula (1), or may contain a chain-like compound (for example, a carbonyl compound having no fluorine atom) that does not correspond to the above-described non-fluorinated ether and hydrofluoroether.

The content of the other solvents is not particularly limited with respect to the total amount of the solvent components of the electrolyte solution; however, it is, for example, 0.0% by volume or more and 30.0% by volume or less, or 1.0% by volume or more and 25.0% by volume or less. From the viewpoint of improving the effect of the present embodiment due to the electrolyte solution, the content of the other solvent is preferably 0.0% by volume or more and 10.0% by volume or less, and 0.0% by volume or more and 5.0% by volume or less.

### 1.1.5. Solvent ratio

The volume ratio of the content of the cyclic compound of Formula (1) to the content of HFE is not particularly limited; however, it is, for example, 0.02 or more and 2.00 or less. From the viewpoint of improving the effect of the present embodiment due to the electrolyte solution, the volume ratio of the content of the cyclic compound of Formula (1) to the content of HFE is preferably 0.05 or more and 1.50 or less, 0.07 or more and 1.00 or less, 0.10 or more and 0.70 or less, 0.11 or more and 0.50 or less, 0.12 or more and 0.40 or less, and 0.13 or more and 0.30 or less.

The volume ratio of the content of the cyclic compound of Formula (1) to the content of the non-fluorinated ether is not particularly limited; however, it is, for example, 0.05 or more and 3.00 or less. From the viewpoint of improving the effect of the present embodiment due to the electrolyte solution, the volume ratio of the content of the cyclic compound of Formula (1) to the content of the non-fluorinated ether is preferably 0.10 or more and 2.50 or less, 0.15 or more and 2.00 or less, 0.20 or more and 1.50 or less, 0.25 or more and 1.00 or less, 0.27 or more and 0.75 or less, and 0.30 or more and 0.50 or less.

The volume ratio of the content of HFE to the content of the non-fluorinated ether is not particularly limited; however, it is, for example, 0.2 or more and 3.0 or less. From the viewpoint of improving the effect of the present embodiment due to the electrolyte solution, the volume ratio of the content of HFE to the content of the non-fluorinated ether is preferably 0.3 or more and 2.8 or less, 0.4 or more and 2.6 or less, and 0.5 or more and 2.5 or less.

The content of the additives described below is preferably 0.05% by mass or more and 10.00% by mass or less, 0.07% by mass or more and 7.50% by mass or less, 0.10% by mass or more and 5.00% by mass or less, 0.15% by mass or more and 2.50% by mass or less, 0.20% by mass or more and 2.00% by mass or less, 0.25% by mass or more and 1.75% by mass or less, 0.30% by mass or more and 1.50% by mass or less, and 0.33% by mass or more and 1.30% by mass or less with respect to the total mass of the non-fluorinated ether, HFE, and the cyclic compound represented by Formula (1). When the content of the additive is within the above-described range, the cycle characteristics and the storage stability at a high temperature tend to be more excellent.

### 1.2. Electrolyte

### 1.2.1. Lithium salt

In the present specification, the lithium salt includes not only lithium bis(fluorosulfonyl)imide described in detail below but also a lithium salt other than lithium bis(fluorosulfonyl)imide.

The concentration of the lithium salt in the electrolyte solution is preferably 0.3 M or more, 0.4 M or more, 0.5 M or more, and 0.8 M or more. The upper limit of the concentration of the lithium salt is not particularly limited; however, it may be 10.0 M or less, may be 5.0 M or less, or may be 2.0 M or less.

### 1.2.1.1. Lithium bis(fluorosulfonyl)imide

The electrolyte solution according to the present embodiment contains lithium bis(fluorosulfonyl)imide (hereinafter, also referred to as a "specific lithium salt", "LiFSI", or "LiN(SO₂F)₂") as the lithium salt. As a result, the lithium secondary battery having the electrolyte solution according to the present embodiment tends to be further excellent in energy density, cycle characteristics, and/or charging/discharging characteristics.

The concentration of the specific lithium salt in the electrolyte solution is preferably 0.3 M or more, 0.4 M or more, 0.5 M or more, and 0.8 M or more. When the concentration of the specific lithium salt is within the above-described range, the SEI layer is more easily formed, and the internal resistance tends to be further lowered. In particular, in the lithium secondary battery containing a fluorine compound such as hydrofluoroether as a solvent, the concentration of the specific lithium salt in the electrolyte solution can be increased, and thus the cycle characteristics and the charging/discharging characteristics can be further improved. The upper limit of the concentration of the specific lithium salt is not particularly limited; however, it may be 10.0 M or less, may be 5.0 M or less, or may be 2.0 M or less.

### 1.2.1.2. Lithium salt other than lithium bis(fluorosulfonyl)imide

The electrolyte solution according to the present embodiment may contain a lithium salt (hereinafter, also referred to as "other lithium salts") other than lithium bis(fluorosulfonyl)imide. The other lithium salts are not particularly limited; however, examples thereof include an inorganic salt and an organic salt of lithium. Specific examples thereof include Lil, LiCl, LiBr, LiF, LiBF₄, LiPF₆, LiPF₂O₂, LiPF₂(C₂O₄)₂, LiPF₂(C₃O₄)₂, LiAsF₆, LiSO₃CF₃, LiN(SO₂CF₃)₂, LiN(SO₂CF₃CF₃)₂, LiBF₂(C₂O₄), LiB(C₂O₄)₂, LiB(C₃O₄)₂, LiB(O₂C₂H₄)₂, LiB(O₂C₂H₄)F₂, LiB(OCOCF₃)₄, LiNO₃, Li₂SO₄, and the like. The other lithium salts may be used alone or in a combination of two or more kinds thereof. In addition, the electrolyte solution may further contain a salt other than the lithium salt as an electrolyte. Such a salt is not particularly limited; however, examples thereof include salts of Na, K, Ca, Mg, and the like.

The total concentration of the other lithium salts in the electrolyte solution is, for example, 0.0 M or more, 0.3 M or more, 0.4 M or more, 0.5 M or more, and 0.8 M or more. The upper limit of the concentration of the other lithium salts is not particularly limited; however, it may be 10.0 M or less, may be 5.0 M or less, or may be 2.0 M or less.

### 1.3. Additive

The electrolyte solution according to the present embodiment contains an additive which is a compound having a cyano group.

The compound having a cyano group may have one or more cyano groups in the molecule. In addition, the compound having a cyano group may be a compound having no unsaturated bond between carbon atoms or may be a compound having an unsaturated bond between carbon atoms. When the compound having a cyano group is a compound having an unsaturated bond between carbon atoms, the unsaturated bond may be a double bond or a triple bond. Further, the compound having a cyano group may have other substituents; however, it is preferably a hydrocarbon compound having no other substituents.

The compound having a cyano group and having no unsaturated bond between carbon atoms is not particularly limited; however, the compound having a cyano group and having no unsaturated bond between carbon atoms is preferably at least one selected from the group consisting of adiponitrile, succinonitrile, glutaronitrile, and 1,3,6-hexanetricarbonitrile. By carrying out mixing with such a compound containing a cyano group as an additive, a reaction between the active material of the lithium secondary battery and the electrolyte solution is suppressed, the cycle life is improved, and the gas generation during storage at a high temperature can be reduced.

The compound having a cyano group and having an unsaturated bond between carbon atoms is not particularly limited; however, the compound having a cyano group and having an unsaturated bond between carbon atoms is at least one selected from the group consisting of tetracyanoethylene, isopropylidene malononitrile, fumaronitrile, and 3-hexenedinitrile. By carrying out mixing with such a compound containing a cyano group and having an unsaturated bond between carbon atoms as an additive, a reaction between the active material of the lithium secondary battery and the electrolyte solution is suppressed, the cycle life is improved, and the gas generation during storage at a high temperature can be reduced.

The additive may contain at least one or more kinds of compounds having a cyano group. By using the above-described additive, the battery tends to have further improved cycle characteristics and further improved storage stability at a high temperature. The above-described additives may be used alone, or two or more kinds thereof may be used in combination.

The content of the additive which is a compound having a cyano group is preferably 0.01% by mass or more and 10.00% by mass or less, 0.01% by mass or more and 7.50% by mass or less, and 0.02% by mass or more and 5.00% by mass or less with respect to the total mass of the electrolyte solution excluding the additive. When the content of the additive is within the above-described range, the cycle characteristics and the storage stability at a high temperature tend to be more excellent.

Since the electrolyte solution according to the present embodiment contains HFE as described above, the cycle characteristics and the storage stability at a high temperature tend to be sufficiently excellent even when the amount of the above-described additive in the above-described electrolyte solution is small.

A product (A x B) of a value A (g/Ah) obtained by dividing the amount (g) of the electrolyte solution injected into the lithium secondary battery of the present embodiment, which includes the electrolyte solution according to the present embodiment, by the battery capacity (Ah) of the lithium secondary battery and the content B (parts by mass) of the additive with respect to 100 parts by mass of the electrolyte solution is preferably 0.10 or more and 9.5 or less, 0.15 or more and 8.0 or less, 0.20 or more and 5.00 or less, 0.30 or more and 4.0 or less, 0.40 or more and 3.0 or less, and 0.50 or more and 2.0 or less. When the product (A x B) is within the above-described range, the cycle characteristics and the storage stability at a high temperature tend to be more excellent. In other words, it is preferable that the electrolyte solution according to the present embodiment is used by adjusting the amount of the electrolyte solution to be injected into the lithium secondary battery and the battery capacity (Ah) of the lithium secondary battery so that the product (A x B) is within the above-described range with respect to the content B described above. It is noted that the content B is in terms of the part by mass of the additive when the total mass of the electrolyte solution excluding the additive is set to 100 parts by mass.

The value A (g/Ah) is preferably 1.0 or more and 5.0 or less, 1.5 or more and 4.0 or less, 1.6 or more and 3.3 or less, 2.0 or more and 3.0 or less, 2.1 or more and 2.9 or less, 2.2 or more and 2.8 or less, 2.3 or more and 2.7 or less, and 2.3 or more and 2.6 or less. When the value A (g/Ah) is within the above-described range in addition to the product (A x B), the cycle characteristics and the storage stability at a high temperature tend to be further excellent.

The inclusion of the cyclic compound of Formula (1), HFE, a non-fluorinated ether, a lithium salt, an additive, and the like in the electrolyte solution can be confirmed by estimating the molecular structure by measurement or analysis using a publicly known method. Such a method is not particularly limited; however, examples thereof include a method using NMR, mass spectrometry, elemental analysis, infrared spectroscopy, and the like. In addition, the molecular structure of the solvent can be estimated by theoretical calculation using a molecular dynamics method, a molecular orbital method, or the like.

### 2. Method of adjusting electrolyte solution

In the preparation of the electrolyte solution according to the present embodiment, a solution obtained by mixing the cyclic compound of Formula (1), HFE, a non-fluorinated ether, and, as necessary, a solvent other than the above-described solvents is used as a solvent, and the specific lithium salt, other lithium salts, and/or salts other than the lithium salts as necessary, and additives are dissolved as electrolytes in the solution, whereby the electrolyte solution can be prepared. The mixing ratio of the additive, the solvent, and the lithium salt may be appropriately adjusted so that the content, the concentration, and the like of the additive, each solvent, and each electrolyte are within the above-described range.

### 3. Lithium secondary battery

The lithium secondary battery according to the present embodiment includes the above-described electrolyte solution. When the lithium secondary battery contains the above-described electrolyte solution, the lithium secondary battery has favorable cycle characteristics, favorable storage stability at a high temperature, and excellent charging/discharging characteristics.

The type of the lithium secondary battery is not particularly limited as long as the charge/discharge of the battery is carried out by an oxidation-reduction reaction of lithium and the battery has an electrolyte solution. Examples of the lithium secondary battery include a lithium-ion battery, a lithium metal battery, an anode-free type lithium secondary battery, a lithium-sulfur battery, a lithium-oxygen battery, a lithium-air battery, and the like. From the viewpoint of further improving the effect due to the electrolyte solution according to the present embodiment, the lithium secondary battery is preferably the anode-free type lithium secondary battery or the lithium metal battery, and more preferably the anode-free type lithium secondary battery.

In the lithium secondary battery according to one embodiment of the present invention, it is preferable that lithium metal is deposited on a surface of the negative electrode and the deposited lithium metal is dissolved to perform charge/discharge. Examples of such a lithium secondary battery include an anode-free type lithium secondary battery and a lithium metal battery. According to such an aspect, the lithium secondary battery tends to further improve the effect of the electrolyte solution.

In addition, when a positive electrode containing a nickel active material is used as a positive electrode of a lithium secondary battery, and more specifically, when a positive electrode containing a high nickel active material is used, there is such a remarkable problem that cycle life deteriorates or gas is generated during storage at a high temperature due to the decomposition of the electrolyte solution, which occurs on the surface of the active material. Here, by using the electrolyte solution according to the present embodiment, even when a positive electrode containing a high nickel active material is used as the positive electrode, the decomposition of the electrolyte solution occurring on the surface of the active material can be more effectively suppressed, and it is possible to achieve all of high energy density, favorable cycle characteristics, favorable storage stability at a high temperature, and excellent charging/discharging characteristics.

Therefore, it is preferable that the electrolyte solution according to the present embodiment is used as an electrolyte solution for a lithium secondary battery, which contains, as a positive-electrode active material, Li_{z}NiₓCo_{y}M_{1-x-y}O_{2+α} (here, 0.5 ≤ x ≤ 1.0, 0 ≤ y ≤ 0.35, 0.9 ≤ z ≤ 1.3, -0.2 ≤ α ≤ 0.15, and M is at least one element selected from Mn, Al, V, Mg, Mo, Nb, Ti, Zr, Fe, Cu, Cr, Zn, F, and B). In the high nickel active material, x is preferably 0.6 or more, 0.7 or more, and 0.8 or more.

In addition, the lithium secondary battery according to the present embodiment, which contains the above-described electrolyte solution, tends to have an excellent discharge capacity not only in normal charging at room temperature (25°C) but also in charging in a low temperature environment, in charging in a high temperature environment, and in high-speed charging.

Hereinafter, the details of various lithium secondary batteries will be described.

### 3.1. Anode-free type battery

Figure 1 is a schematic cross-sectional view of an anode-free type battery according to the present embodiment. As illustrated in Figure 1, an anode-free type battery 100 of the present embodiment includes a positive electrode 120, a negative electrode 140 not having a negative-electrode active material, a separator 130 disposed between the positive electrode 120 and the negative electrode 140, and an electrolyte solution which is not illustrated in Figure 1. The positive electrode 120 has a positive electrode current collector 110 on the surface thereof opposite to the surface facing the separator 130. Hereinafter, each configuration of the anode-free type battery 100 will be described.

In the anode-free type lithium secondary battery (hereinafter also referred to as an "anode-free type battery" or an "AFB") of the present embodiment, the negative electrode consists of a negative electrode current collector not having a negative-electrode active material, and the above-described electrolyte solution is used as an electrolyte solution. The negative-electrode active material is a substance that causes an electrode reaction, that is, an oxidation reaction and a reduction reaction in the negative electrode. Specifically, examples of the negative-electrode active material of the present embodiment include lithium metal and a host material for a lithium element (lithium ions or lithium metal). The host material for the lithium element means a material provided to retain the lithium ions or the lithium metal in the negative electrode. Examples of such a retention mechanism include intercalation, alloying, occlusion of metal clusters, and the like, and the intercalation is typically used.

In the anode-free type battery, before the initial charging of the battery, the negative electrode does not have a negative-electrode active material and consists of only a negative electrode current collector. As a result, after the initial charging, lithium metal is deposited on the negative electrode, and the deposited lithium metal is electrolytically dissolved to perform charge/discharge. Therefore, the anode-free type battery has an advantage that a volume occupied by the negative-electrode active material and a mass of the negative-electrode active material are reduced, and the volume and the mass of the entire battery are small, leading to a high energy density in principle. The anode-free type battery includes a negative electrode that consists of a negative electrode current collector not having a negative-electrode active material.

In the anode-free type battery of the present specification, the negative electrode "not having a negative-electrode active material" as used herein means the negative electrode does not have the negative-electrode active material or does not substantially have the negative-electrode active material. The fact that the negative electrode does not substantially have the negative-electrode active material means the content of the negative-electrode active material in the negative electrode is 10.0% by mass or less with respect to the total amount of the negative electrode. The content of the negative-electrode active material in the negative electrode of the anode-free type battery is preferably 5.0% by mass or less, 1.0% by mass or less, 0.1% by mass or less, or 0.0% by mass with respect to the total amount of the negative electrode. Since the negative electrode does not have the negative-electrode active material or the content of the negative-electrode active material in the negative electrode is within the above-described range, the energy density of the lithium secondary battery is high.

In addition, in the anode-free type battery of the present specification, the phrase "before the initial charging" of the battery means a state from the time when the battery is assembled to the time when the battery is first charged. In addition, the phrase "the battery is at the end of discharging" means that the voltage of the battery is preferably in a state of 1.0 V or more and 3.8 V or less, and 1.0 V or more and 3.0 V or less.

In the anode-free type battery according to the present embodiment, when the battery voltage is 1.0 V or more and 3.5 V or less, the content of the lithium metal may be 10.0% by mass or less (which is preferably 5.0% by mass or less, and may be 1.0% by mass or less) with respect to the total amount of the negative electrode; when the battery voltage is 1.0 V or more and 3.0 V or less, the content of the lithium metal may be 10.0% by mass or less (which is preferably 5.0% by mass or less, and may be 1.0% by mass or less) with respect to the total amount of the negative electrode; or when the battery voltage is 1.0 V or more and 2.5 V or less, the content of the lithium metal may be 10.0% by mass or less (which is preferably 5.0% by mass or less, and may be 1.0% by mass or less) with respect to the total amount of the negative electrode.

In addition, in the anode-free type battery according to the present embodiment, the ratio M_{3.0}/M_{4.2} of the mass M_{3.0} of the lithium metal deposited on the negative electrode in a state where the voltage of the battery is 3.0 V to the mass M_{4.2} of the lithium metal deposited on the negative electrode in a state where the voltage of the battery is 4.2 V is preferably 40.0% or less, 38.0% or less, or 35.0% or less. The ratio M_{3.0}/M_{4.2} may be 1.0% or more, 2.0% or more, 3.0% or more, or 4.0% or more.

It is noted that examples of the negative-electrode active material include lithium metal and an alloy including the lithium metal, a carbon-based material, a metal oxide, a metal to be alloyed with lithium, an alloy including the metal, and the like. The carbon-based material is not particularly limited, and examples thereof include graphene, graphite, hard carbon, carbon nanotubes, and the like. The metal oxide is not particularly limited, and examples thereof include a silicon oxide compound, a titanium oxide-based compound, a cobalt oxide-based compound, and the like. Examples of the metal to be alloyed with lithium include silicon, germanium, tin, lead, aluminum, and gallium.

The negative electrode of the anode-free type battery is not particularly limited as long as it does not have a negative-electrode active material and can be used as a current collector. Examples of the negative electrode include negative electrodes consisting of at least one selected from the group consisting of metals such as Cu, Ni, Ti, Fe, and other metals that do not react with Li, alloys of these metals, and stainless steel (SUS), and preferred examples of the negative electrode include negative electrodes consisting of at least one selected from the group consisting of Cu, Ni, alloys of these metals, and stainless steel (SUS). When such a negative electrode is used, the energy density and the productivity of the battery tend to be further improved. These negative electrode materials may be used alone or in a combination of two or more kinds thereof. It is noted that the phrase "a metal that does not react with Li" in the present specification means a metal which does not form an alloy by reaction with lithium ions or lithium metal under the operation conditions of a lithium secondary battery.

The average thickness of the negative electrode of the anode-free type battery is not particularly limited; however, it is, for example, 3.0 µm or more and 30.0 µm or less. From the viewpoint of reducing the volume occupied by the negative electrode in the anode-free type battery and improving the energy density, the average thickness of the negative electrode is preferably 4.0 µm or more and 20.0 µm or less, 5.0 µm or more and 18.0 µm or less, and 6.0 µm or more and 15 µm or less.

A separator of the anode-free type battery is not particularly limited as long as it has a function of physically and/or electrically separating the positive electrode and the negative electrode from each other, and a function of securing the ion conductivity of lithium ions. Examples of such a separator include a porous member having insulating properties, a polymer electrolyte, a gel electrolyte, and an inorganic solid electrolyte, and typically include at least one selected from the group consisting of the porous member having insulating properties, the polymer electrolyte, and the gel electrolyte. In addition, as the separator, a member may be used alone or members may be used in a combination of two or more kinds thereof.

As the separator of the anode-free type battery, it is preferable that the porous member having insulating properties, the polymer electrolyte, or the gel electrolyte is used alone, or two or more kinds thereof are used in combination. It is noted that, when the porous member having insulating properties is used alone as the separator, the lithium secondary battery needs to further include an electrolyte solution.

When the separator includes a porous member having insulating properties, such a member exhibits ion conductivity by filling the pores of the member with a material having ion conductivity. As a result, in the present embodiment, for example, the electrolyte solution according to the present embodiment, the gel electrolyte including the electrolyte solution according to the present embodiment, and the like are filled.

A material constituting the porous member having insulating properties is not particularly limited, and examples thereof include an insulating polymer material, and specific examples thereof include polyethylene (PE) and polypropylene (PP). That is, the separator may be a porous polyethylene (PE) film, a porous polypropylene (PP) film, or a laminated structure thereof.

The separator may be covered (coated) with a separator coating layer. The separator coating layer may cover both of the surfaces of the separator or may cover only one of the surfaces of the separator. From the viewpoint of improving the cycle characteristics of the lithium secondary battery in the present embodiment, it is preferable that both surfaces of the separator are covered. It is noted that the separator coating layer in the present embodiment is a film-like coating layer which is uniformly continuous, and is, for example, a film-like coating layer which is uniformly continuous over an area of 50% or more of the surface of the separator.

The separator coating layer is not particularly limited, and for example, a binder such as polyvinylidene fluoride (PVDF), a composite material (SBR-CMC) of styrene butadiene rubber and carboxymethyl cellulose, or a polyacrylic acid (PAA) is preferable. In the separator coating layer, inorganic particles such as silica, alumina, titania, zirconia, magnesium hydroxide, and the like may be added to the binder.

The average thickness of the separator including the separator coating layer is not particularly limited; however, it is, for example, 3.0 µm or more and 40.0 µm or less. In the lithium secondary battery, from the viewpoint of reducing the volume occupied by the separator in the battery while reliably separating the positive electrode and the negative electrode from each other, the average thickness of the separator is preferably 5.0 µm or more and 30.0 µm or less, 7.0 µm or more and 10.0 µm or less, and 10.0 µm or more and 20.0 µm or less.

The positive electrode of the anode-free type battery is not particularly limited as long as it is a positive electrode generally used for a lithium secondary battery, and publicly known materials can be appropriately selected depending on the use application of the lithium secondary battery. From the viewpoint of improving the stability and the output voltage of the battery, it is preferable that the positive electrode has a positive-electrode active material. When the positive electrode has a positive-electrode active material, typically, lithium ions are filled into and extracted from the positive-electrode active material by the charge/discharge of the battery. It is noted that, in the present specification, the "positive-electrode active material" is a substance that causes an electrode reaction, that is, an oxidation reaction and a reduction reaction in the positive electrode, and specific examples of the positive-electrode active material include a host material of a lithium element (typically, a lithium ion).

Such a positive-electrode active material is not particularly limited, and examples thereof include metal oxides and metal phosphates. The metal oxides are not particularly limited, and examples thereof include cobalt oxide-based compounds, manganese oxide-based compounds, nickel oxide-based compounds, and the like. The metal phosphates are not particularly limited, and examples thereof include iron phosphate-based compounds and cobalt phosphate-based compounds. Examples of the typical positive-electrode active material include LiCoO₂, Li_{z}NiₓCo_{y}M_{1-x-y}O_{2+α} (here, 0.5 ≤ x ≤ 1.0, 0 ≤ y ≤ 0.35, 0.9 ≤ z ≤ 1.3, -0.2 ≤ α ≤ 0.15, and M is at least one element selected from Mn, Al, V, Mg, Mo, Nb, Ti, Zr, Fe, Cu, Cr, Zn, F, and B, and this compound is also referred to as "LiNCM" hereinafter), LiNiₓMn_{y}O (x + y = 1), LiNiO₂, LiMn₂O₄, LiFePO, LiCoPO, LiFeOF, LiNiOF, and LiTiS₂. Such positive-electrode active materials can be used alone or in a combination of two or more kinds thereof.

Among the above-described positive-electrode active materials, LiNCM, LiNiₓMn_{y}O (x + y = 1), LiNiO₂, and LiNiOF are preferable, and LiNCM is more preferable. In addition, the LiNCM preferably satisfies 0.6 ≤ x ≤ 1.0, satisfies 0.7 ≤ x ≤ 1.0, and satisfies 0.8 ≤ x ≤ 1.0.

The positive electrode may include components other than the positive-electrode active material. Such a component is not particularly limited, and examples thereof include a sacrificial positive electrode material, a conductive auxiliary agent, a binder, a gel electrolyte, and a polymer electrolyte. Here, the sacrificial positive electrode material is a lithium-containing compound that causes an oxidation reaction in a charge/discharge potential range of the positive-electrode active material and does not substantially cause a reduction reaction, and in particular, the positive electrode may include the sacrificial positive electrode in an anode-free type battery. In particular, the positive electrode may include a gel electrolyte. According to such an aspect, adhesion force between the positive electrode and the positive electrode current collector is improved by a function of the gel electrolyte, and it is possible to attach a thinner positive electrode current collector, and thus, it is possible to further improve the energy density of the battery. In a case of attaching the positive electrode current collector onto a surface of the positive electrode, a positive electrode current collector formed on a release paper may be used.

The conductive auxiliary agent in the positive electrode is not particularly limited, and examples thereof include carbon black, single-wall carbon nanotubes (SWCNT), multi-wall carbon nanotubes (MWCNT), carbon nanofibers (CF), and the like. In addition, the binder is not particularly limited, and examples thereof include polyvinylidene fluoride, polytetrafluoroethylene, styrene butadiene rubber, acrylic resins, polyimide resins, and the like.

The gel electrolyte is not particularly limited; however, examples thereof include a polymer, an organic solvent, and a lithium salt. The polymer in the gel electrolyte is not particularly limited; however, examples thereof include a copolymer of polyethylene and/or polyethylene oxide, polyvinylidene fluoride, a copolymer of polyvinylidene fluoride and hexafluoropropylene, and the like. In addition, the polymer electrolyte is not particularly limited; however, examples thereof include a solid polymer electrolyte mainly including a polymer and an electrolyte, and a semisolid polymer electrolyte mainly including a polymer, an electrolyte, and a plasticizer.

The average thickness of the positive electrode is preferably 20.0 µm or more and 100.0 µm or less, 30.0 µm or more and 80.0 µm or less, and 40.0 µm or more and 70.0 µm or less. However, the average thickness of the positive electrode can be appropriately adjusted according to the desired capacity of the battery.

A positive electrode current collector is disposed on one side of the positive electrode of the anode-free type battery. The positive electrode current collector is not particularly limited as long as it is a conductor not reactive with lithium ions in the battery. Examples of such a positive electrode current collector include aluminum. It is noted that the positive electrode current collector may not be provided, and in this case, the positive electrode itself acts as a current collector. It is noted that the positive electrode current collector functions to transfer electrons to and from the positive electrode (in particular, the positive-electrode active material), and is in physical and/or electrical contact with the positive electrode.

In the anode-free type battery, the average thickness of the positive electrode current collector is preferably 1.0 µm or more and 15.0 µm or less, 2.0 µm or more and 10.0 µm or less, and 3.0 µm or more and 6.0 µm or less. According to such an aspect, the volume occupied by the positive electrode current collector in the anode-free type battery is reduced, and therefore, the energy density of the anode-free type battery is further improved.

One use aspect of the lithium secondary battery, including an anode-free type battery, will be described. In one use aspect of the lithium secondary battery, a positive electrode terminal and a negative electrode terminal for connecting the battery to an external circuit are joined to the positive electrode current collector and the negative electrode, respectively. In the lithium secondary battery, the negative electrode terminal is connected to one end of an external circuit and the positive electrode terminal is connected to the other end of the external circuit to perform charge/discharge. In the positive electrode terminal and the negative electrode terminal, the lithium secondary battery is charged by applying a voltage to cause a current to flow from the negative electrode terminal (negative electrode) to the positive electrode terminal (positive electrode) through the external circuit. In the lithium secondary battery after the charge, the positive electrode terminal and the negative electrode terminal are connected through a desired external circuit, thus to discharge the lithium secondary battery.

In the anode-free type battery, it is presumed that the solid electrolyte interface layer (SEI layer) is formed on the surface of the negative electrode (at the interface between the negative electrode and the separator) by the initial charging, but the battery may not have the SEI layer. By charging the anode-free type battery, the deposition of the lithium metal is generated at an interface between the negative electrode and the SEI layer, at an interface between the negative electrode and the separator, and/or at an interface between the SEI layer and the separator. In addition, in the anode-free type battery, the deposition of the lithium metal generated on the negative electrode is electrolytically dissolved by discharge. When the SEI layer is formed in the battery, the deposition of the lithium metal generated at least at the interface between the negative electrode and the SEI layer and/or the interface between the SEI layer and the separator is electrolytically dissolved.

The manufacturing method for an anode-free type battery is not particularly limited as long as it can manufacture a lithium secondary battery including the above-described configuration, and examples of the method include the following methods.

The positive electrode current collector and the positive electrode of the anode-free type battery are manufactured, for example, as follows. The above-described positive-electrode active material, conductive auxiliary agent, and binder are mixed to obtain a positive electrode mixture. The blending ratio may be so that the positive-electrode active material is 50.0% by mass or more and 99.0% by mass or less, the conductive auxiliary agent is 0.5% by mass or more and 30.0% by mass or less, and the binder is 0.5% by mass or more and 30.0% by mass or less, with respect to the total amount of the positive electrode mixture. The obtained positive electrode mixture is applied onto one of the surfaces of a metal foil (for example, Al foil) serving as a positive electrode current collector and having a predetermined thickness (for example, 5.0 µm or more and 1.0 mm or less), followed by press molding. The obtained molded product is punched into a predetermined size to obtain a positive electrode current collector and a positive electrode.

Next, the above-described negative electrode material of the anode-free type battery, for example, a metal foil (such as an electrolytic Cu foil) having a thickness of 1.0 µm or more and 1.0 mm or less is washed with a sulfamic-acid-containing solvent, punched into a predetermined size, ultrasonically washed with ethanol, and then dried to obtain a negative electrode.

Next, a separator having the above-described configuration is prepared. The separator may be manufactured by a method publicly known in the related art, or a commercially available separator may be used. In addition, a functional buffer layer, which is in a fibrous or porous form and has a function of mitigating volume expansion and contraction accompanied by dissolution and deposition of the lithium metal, may be provided between the separator and the negative electrode. The functional buffer layer preferably has ion conductivity or electronic conductivity, but it may not have either.

Next, the electrolyte solution according to the present embodiment is prepared by the above-described preparation method.

The positive electrode current collector on which the positive electrode is formed, the separator, and the negative electrode, obtained as described above, are laminated in this order so that the positive electrode faces the separator to obtain a laminate. The obtained laminate can be sealed in an airtight container together with the electrolyte solution to obtain an anode-free type battery. The airtight container is not particularly limited, and examples include a laminate film.

The liquid injection amount of the electrolyte solution may be appropriately adjusted according to the size of the battery. The liquid injection amount of the electrolyte solution is not particularly limited; however, it is, for example, 10.0 g or more and 30.0 g or less, 12.5 g or more and 25.0 g or less, and 15.0 g or more and 20.0 g or less.

The value A (g/Ah) obtained by dividing the amount (g) of the electrolyte solution injected into the battery by the battery capacity (Ah) is not particularly limited; however, it is preferably set to, for example, the range exemplified in the section of the electrolyte solution.

### 3.2. Lithium metal battery

The lithium metal battery (hereinafter also referred to as an "LMB") is manufactured by using an electrode having lithium metal or a lithium metal alloy on a surface of the electrode or using a lithium metal simple body as a negative electrode. The LMB of the present embodiment has the electrolyte solution according to the present embodiment. In the same manner as in the anode-free type battery, in the LMB, the lithium metal is deposited on a surface of the negative electrode, and the deposited lithium is electrolytically dissolved to perform charge/discharge.

As described above, the LMB is different from the anode-free type battery in that the negative electrode includes lithium metal as a negative-electrode active material before the initial charging of the battery.

The lithium metal battery according to the present embodiment includes a positive electrode current collector, a positive electrode having a positive-electrode active material disposed on the positive electrode current collector, a negative electrode having lithium metal, facing the positive electrode, and a separator disposed between the positive electrode and the negative electrode. The positive electrode current collector, the positive electrode, the separator, and configurations thereof and preferred aspects thereof are the same as those of the anode-free type battery, except as described below.

The negative electrode of the LMB is not particularly limited as long as it includes lithium metal or a lithium metal alloy. Since the negative electrode of the LMB uses lithium metal or a lithium metal alloy having a large specific capacity and a low oxidation-reduction potential, the LMB is generally a battery having a higher energy density than a lithium-ion battery. Examples of such a negative electrode include a lithium metal electrode, an electrode serving as a clad material in which a rolled lithium metal foil is bonded to the surface of a conductive metal foil such as copper, an electrode in which lithium metal is electrochemically deposited on a surface of a metal foil such as copper in advance, an electrode in which metallic lithium is vacuum-deposited, and the like. From the viewpoint of further improving the effect of the present embodiment, an electrode in which a lithium metal foil is bonded onto a surface of conductive metal such as copper, or an electrode in which lithium metal is electrochemically deposited is preferable, and the electrode in which a lithium metal foil is bonded onto a surface of a conductive metal such as copper is more preferable.

An average thickness of the negative electrode of the LMB is not particularly limited; however, it is, for example, 5.0 µm or more and 100.0 µm or less. From the viewpoint of improving the capacity and/or the energy density of the battery, the average thickness of the negative electrode is preferably 8.0 µm or more and 50.0 µm or less, 10.0 µm or more and 40.0 µm or less, and 10.0 µm or more and 20.0 µm or less.

The LMB may be produced using publicly known materials and publicly known production methods, or may be produced in the same manner as the above-described method for producing the anode-free type battery, except that lithium metal or a lithium metal alloy is used as the negative electrode.

As one aspect of the lithium metal battery according to the present embodiment, the lithium metal battery may be a lithium-air battery. In the lithium-air battery, lithium ions in the electrolyte solution are reacted with oxygen to form lithium peroxide during discharge, and the lithium peroxide is decomposed into a lithium ion and oxygen during charging to perform charge/discharge. The lithium-air battery can be produced by using a configuration in the related art. For example, it can be produced by configuring the positive electrode and the positive electrode current collector by taking a configuration where the lithium metal battery has an oxygen-containing gas such as air and oxygen can be used as the positive-electrode active material. It is noted that for various members such as a positive electrode, a positive electrode current collector, and a conductive agent of the lithium-air battery, publicly known members may be used as members constituting the lithium-air battery.

### 3.3. Lithium-ion battery

The lithium-ion battery (hereinafter also referred to as an "LIB") has a host material for a lithium element (lithium ions or lithium metal) in the negative electrode, such a material is filled with the lithium element by the charge of the battery, and the host material releases the lithium element to discharge the battery. The LIB is different from the anode-free type battery, particularly in that the negative electrode has the host material of the lithium element.

The lithium-ion battery can be manufactured using publicly known materials and publicly known manufacturing methods. In addition, the electrolyte solution according to the present embodiment may be used in a use application for exhibiting ion conductivity inside of a lithium-ion battery, and a manufacturing stage in which the electrolyte solution is injected, names of members to be included, and the like are not particularly limited.

The shape of the battery included in the lithium secondary battery according to the present embodiment is not particularly limited, and may be, for example, a sheet type, a laminated sheet type, a thin type shape, a bottomed cylindrical type shape, a bottomed prismatic type shape, or the like. From the viewpoint of further enhancing and reliably exhibiting the effect according to the present embodiment, it is preferable that the battery has the sheet type, the laminated sheet type, or the thin type shape.

### <Addenda>

The embodiment according to the present disclosure includes the following aspects.
[1] An electrolyte solution for a lithium secondary battery, containing:
   an ether having no fluorine atom;
   a hydrofluoroether;
   an additive which is a compound having a cyano group; and
   lithium bis(fluorosulfonyl)imide.
[2] The electrolyte solution according to [1],
   in which the compound containing a cyano group is at least one selected from the group consisting of adiponitrile, succinonitrile, glutaronitrile, and 1,3,6-hexanetricarbonitrile.
[3] The electrolyte solution according to [1],
   in which the compound containing a cyano group is a compound containing a cyano group and having an unsaturated bond between carbon atoms.
[4] The electrolyte solution according to [3],
   in which the compound containing a cyano group and having an unsaturated bond between carbon atoms is at least one selected from the group consisting of tetracyanoethylene, isopropylidene malononitrile, fumaronitrile, and 3-hexenedinitrile.
[5] The electrolyte solution according to any one of [1] to [4],
   in which a product (A x B) of a value A (g/Ah) obtained by dividing an amount (g) of the electrolyte solution injected into a battery by a battery capacity (Ah) and a content B (parts by mass) of the additive with respect to 100 parts by mass of the electrolyte solution is 0.10 or more and 9.5 or less.
[6] The electrolyte solution according to any one of [1] to [5],
   in which the ether having no fluorine atom includes at least one selected from the group consisting of 1,2-dimethoxyethane, 1,2-diethoxyethane, and 1,2-dimethoxypropane.
[7] The electrolyte solution according to any one of [1] to [6],
   in which the hydrofluoroether includes a chain-like fluorine compound having at least one of a monovalent group represented by Formula (A) or Formula (B), 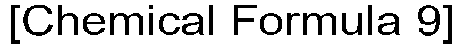 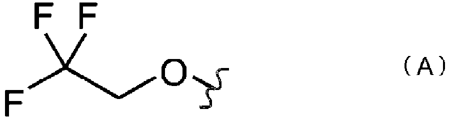 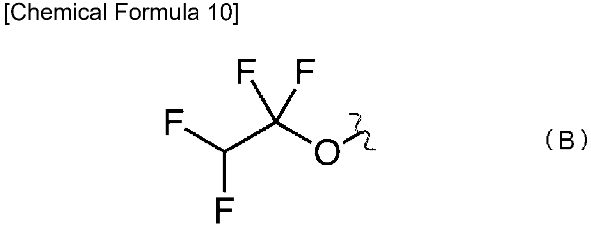 (in Formulae (A) and (B), a wavy line represents a bonding site in the monovalent group).
[8] The electrolyte solution according to any one of [1] to [7], further containing:
   a cyclic compound represented by Formula (1), 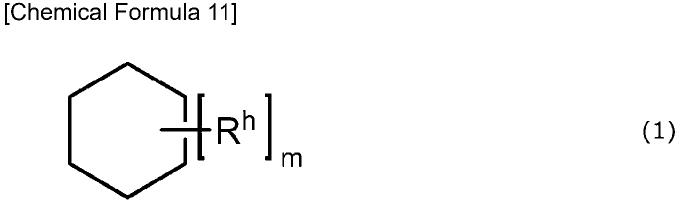 (in Formula (1), m is an integer of 0 or more and 3 or less, and R^{h} is a monovalent saturated hydrocarbon group having 1 or more and 10 or less carbon atoms).
[9] The electrolyte solution according to [8],
   in which the cyclic compound includes at least one selected from the group consisting of cyclohexane, methylcyclohexane, and ethylcyclohexane.
[10] A lithium secondary battery containing:
   the electrolyte solution according to any one of [1] to [9],
   in which charging/discharging is carried out by depositing a lithium metal on a surface of a negative electrode and dissolving the deposited lithium metal.
[11] The lithium secondary battery according to [10], further containing, as a positive-electrode active material:
   Li_{z}NiₓCo_{y}M_{1-x-y}O_{2+α} (here, 0.5 ≤ x ≤ 1.0, 0 ≤ y ≤ 0.35, 0.9 ≤ z ≤ 1.3, -0.2 ≤ a ≤ 0.15, and M is at least one element selected from Mn, Al, V, Mg, Mo, Nb, Ti, Zr, Fe, Cu, Cr, Zn, F, and B).

### [Examples]

Hereinafter, the present invention will be described in more detail, using examples of the present embodiment and comparative examples. The present embodiment is not limited in any way by the following examples. In addition, unless otherwise specified, the operation was carried out at room temperature (25°C) and 10⁵ Pa.

### 1. Anode-free type lithium secondary battery

### 1.1. Production of anode-free type lithium secondary battery

An anode-free type lithium secondary battery (AFB) of Example 1 was produced as follows.

### 1.1.1. Preparation of negative electrode

First, an electrolytic Cu foil having a thickness of 4.0 µm was prepared and punched to a predetermined size (105 mm x 55 mm).

### 1.1.2. Production of positive electrode

Next, a positive electrode was produced. A mixture of 96 parts by mass of LiNi_{0.85}Co_{0.12}Al_{0.03}O₂ as a positive-electrode active material, 2.0 parts by mass of carbon black as a conductive auxiliary agent, and 2.0 parts by mass of polyvinylidene fluoride (PVDF) as a binder was applied to both surfaces of a 12 µm-thick Al foil and press-molded. The molded product thus obtained was punched to a predetermined size (100 mm x 50 mm) to obtain a positive electrode having a positive electrode current collector. In addition, the obtained positive electrode had a weight per unit area of 18 mg/cm². It is noted that the positive-electrode active material capacity was 200 mAh/g.

### 1.1.3. Preparation of separator

A separator obtained by coating 2.0-µm polyvinylidene fluoride (PVDF) on both surfaces of a 12-µm polyethylene microporous membrane and having a predetermined size (108 mm x 58 mm) was prepared as the separator.

### 1.1.4. Preparation of electrolyte solution

An electrolyte solution was prepared as follows. Two kinds of solvents were mixed so that 1,2-dimethoxyethane was 30% by volume as a non-fluorinated ether and 1,1,2,2-tetrafluoroethyl-2,2,3,3-tetrafluoropropyl ether was 70% by volume as HFE. LiN(SO₂F)₂ was dissolved in the obtained mixed solution so that the molar concentration thereof was 1.2 M. Further, succinonitrile was dissolved as the additive so that the content thereof was 0.50 parts by mass when the total mass of the electrolyte solution excluding the additive was set to 100 parts by mass. In this way, an electrolyte solution was obtained.

### 1.1.5. Assembly of battery

The punched separator, the positive electrode, and the negative electrode were laminated in the order of separator/negative electrode/separator/positive electrode/separator/.../positive electrode/separator/negative electrode/separator so that the number of positive electrodes, the number of negative electrode current collector foils, and the number of separators were 20, 21, and 42, respectively. Thereafter, an aluminum tab having a thickness of 0.2 mm was joined by ultrasonic welding to the uncoated part of the positive-electrode active material of the laminated positive electrode, and a copper/nickel tab was individually joined to the negative electrode by ultrasonic welding. Thereafter, while measuring the weight with an electronic balance, the electrolyte solution was injected until the amount of the electrolyte solution reached the value shown in Table 1, and vacuum sealing was carried out under reduced pressure of -50 kPa to obtain a lithium secondary battery.

A lithium secondary battery of each of Examples 2 to 12 was obtained in the same manner as in Example 1, except that an electrolyte solution was prepared using the solvent and the electrolyte shown in Table 1. **It** is noted that, in Examples 10 to 12, the compound represented by Formula (1) was further mixed as a solvent. **In** Experimental Examples 1 and 2, a lithium secondary battery was obtained in the same manner as in Example 6 and Example 5, except that the liquid injection amount of the electrolyte solution was changed to the value shown in Table 1.

A lithium secondary battery of each of Comparative Examples 1 to 4 was obtained in the same manner as in Example 1, except that an electrolyte solution was prepared using the solvent and the electrolyte shown in Table 1.

**It** is noted that the abbreviations in Table 1 are respectively notations corresponding to the following compounds.
· LiFSI: LiN(SO₂F)₂ (lithium bis(fluorosulfonyl)imide)
· LiPF₆: lithium hexafluorophosphate
· DME: 1,2-dimethoxyethane
· DEE: 1,2-diethoxyethane
· DMP: 1,2-dimethoxypropane
· HFE1: 1,1,2,2-tetrafluoroethyl-2,2,2-trifluoroethyl ether
· HFE2: 1,1,2,2-tetrafluoroethyl-2,2,3,3-tetrafluoropropyl ether
· HC1: cyclohexane
· HC2: methylcyclohexane
· HC3: ethylcyclohexane
· DMC: dimethyl carbonate
· EC: ethylene carbonate

Dimethyl carbonate and ethylene carbonate are solvents that do not correspond to any of the non-fluorinated ether, HFE, and the compound represented by Formula (1).

In Table 1, the numbers in the columns of the non-fluorinated ether, HFE, and the compound of Formula (1) indicate the content with respect to the total amount of the solvent in terms of units of % by volume. In addition, the numbers described on the right side of the specific lithium salt and the other lithium salts indicate the concentration in the electrolyte solution in terms of units of M (molar). In addition, the adding amount B indicates the content of the additive in terms of parts by mass when the total mass of the electrolyte solution excluding the additive is set to 100 parts by mass. For example, it is indicated that in Example 1, the electrolyte solution contains 30% by volume of DME and 70% by volume of HFE2, contains 1.2 M of LiFSI, and contains 0.5 parts by mass of succinonitrile with respect to 100 parts by mass of the total mass of the electrolyte solution excluding the additives.

**In** Table 1, when the electrolyte solution contains the cyclic compound of Formula (1), the number of substituents bonded to the benzene ring of the cyclic compound of Formula (1) is shown in the column of "Number of substituents (compound of Formula (1))". **In** addition, the specific gravity of each electrolyte solution is shown in the column of "Specific gravity of electrolyte solution (g/cc)".

**In** Table 1, in each of the examples and the comparative examples, the liquid injection amount is the amount (g) of the electrolyte solution injected into the assembled battery. **In** addition, the liquid injection amount/battery capacity A is a value obtained by dividing the liquid injection amount by the battery capacity of the assembled battery. **In** addition, B x A is a value obtained by multiplying the adding amount B by the liquid injection amount/battery capacity A. **It** is noted that the battery capacity A is an ideal capacity (6.9 Ah) of the battery, which is calculated from the total amount of the positive-electrode active material.

### 1.2. Evaluation

Hereinafter, firstly subjecting the produced lithium secondary battery to CC charging is also referred to as "initial charging", and firstly carrying out CC discharging is also referred to as "initial discharging". **In** addition, in an environment of a temperature of 25°C, after initial charging is carried out at a current of 0.7 A until the voltage reaches 4.2 V, initial discharging is carried out at a current of 0.7 A until the voltage reaches 3.0 V, and the capacity determined from this initial discharging is also referred to as an "initial capacity". **It** is noted that the CC charging is charging **carried** out at a constant current value, and the CC discharging is discharging carried out at a constant current value.

### 1.2.1. Compatibility

After adjusting the electrolyte solution, the electrolyte solution was allowed to stand for 1 hour in an argon atmosphere, and then the presence or absence of phase separation was visually observed. In Table 1, the symbol "-" indicates a case where phase separation cannot occur because only one kind of solvent is used. In addition, the symbol "∘" indicates a case where phase separation does not occur and the components are determined to be compatible with each other. In addition, "in salt and insoluble" indicates a case where LiFSI remains undissolved. It is noted that, in the examples indicated by the symbol "-" and the symbol "∘", LiFSI was completely dissolved in the solvent.

### 1.2.2. Discharge capacity (charging/discharging characteristics)

In an environment of a temperature of 25°C, the produced lithium secondary battery was subjected to initial charging at a current of 0.7 A until the voltage reached 4.2 V and then subjected to initial discharging at a current of 0.7 A until the voltage reached 3.0 V. Next, in an environment of a temperature of 25°C, CC charging was carried out at a current of 0.7 A until the voltage reached 4.2 V, and then CC discharging was carried out at a current of 0.7 A until the voltage reached 3.0 V to determine the discharge capacity. This value is shown as "Discharge capacity (Ah), 25°C (0.1 C)".

In addition, in an environment of a temperature of 25°C, the produced lithium secondary battery was subjected to initial charging at a current of 0.7 A until the voltage reached 4.2 V and then subjected to initial discharging at a current of 0.7 A until the voltage reached 3.0 V. Next, in an environment of a temperature of 25°C, CC charging was carried out at a current of 0.7 A until the voltage reached 4.2 V, and then CC discharging was carried out at a current of 34.5 A until the voltage reached 3.0 V to determine the discharge capacity. This value is shown as "Discharge capacity (Ah), 25°C (5 C)".

**In** addition, in an environment of a temperature of 25°C, the produced lithium secondary battery was subjected to initial charging at a current of 0.7 A until the voltage reached 4.2 V and then subjected to initial discharging at a current of 0.7 A until the voltage reached 3.0 V. Next, in an environment of a temperature of -30°C, CC charging was carried out at a current of 0.7 A until the voltage reached 4.2 V, and then CC discharging was carried out at a current of 0.7 A until the voltage reached 3.0 V to determine the discharge capacity. This value is shown as "Discharge capacity (Ah), -30°C (0.1 C)".

### 1.2.3. Number of cycles (cycle characteristics)

The cycle characteristics of each of the lithium secondary batteries produced in the examples and the comparative examples were evaluated as follows.

**In** addition, using the produced lithium secondary battery, in an environment of a temperature of 25°C, initial charging was carried out at a current of 0.7 A until the voltage reached 4.2 V, and then initial discharging was carried out at a current of 0.7 A until the voltage reached 3.0 V. Next, in an environment of a temperature of 25°C, a cycle in which CC charging was carried out at a current of 2.8 A until the voltage reached 4.2 V and then CC discharging was carried out at a current of 4.8 A until the voltage reached 3.0 V was repeated. For each of the examples and the comparative examples, the discharge capacity was determined from the CC discharging. The number of cycles (in Table 1, referred to as "number of cycles") at which the discharge capacity reached 80% of the initial capacity is shown in Table 1.

### 1.2.4. Volume increase (storage stability at high temperature)

**In** addition, using the produced lithium secondary battery of each of the examples and the comparative examples, in an environment of a temperature of 25°C, initial charging was carried out at a current of 0.7 A until the voltage reached 4.2 V, and then initial discharging was carried out at a current of 0.7 A until the voltage reached 3.0 V. Next, in an environment of a temperature of 25°C, CC charging was carried out at a current of 0.7 A until the voltage reached 4.2 V, and then the volume of the lithium secondary battery was measured. Thereafter, the lithium secondary battery was allowed to stand in a constant-temperature tank at 60°C for 7 days, the volume of the lithium secondary battery was measured again, and the amount of change thereof is shown as "Volume increase" in Table 1.

**[Table 1]**

| Example Comparative Example | Electrolyte solution composition | | | | | | Number of substituents (compound of Formula (1)) | Presence or absence of compatibility | Specific gravity of electrolyte solution (g/cc) | Liquid injection amount (9) | Liquid injection amount A (g/Ah) | B x A | Discharge capacity (Ah) | | | Number of cycles | Volume increase at 60°C and 7th day (ml) |
|---|---|---|---|---|---|---|---|---|---|---|---|---|---|---|---|---|---|
| | Lithium salt | Non-fluorinated ether | HFE | Compound of Formula (1) | Additive | Additive Adding amount B (%) | | | | | | | 25°C (0.1C) | 25°C (5C) | -30°C (0.1C) | | |
| Example 1 | 1.2M LiFSI | DME:30 | HFE2:70 | - | succinonitrile | 0.5 | - | - | 1.4 | 16.9 | 2.4 | 1.2 | 6.9 | 5.3 | 4.8 | 162 | 2.9 |
| Example 2 | 1.2M LiFSI | DME:30 | HFE2:70 | - | adiponitrile | 0.5 | - | - | 1.4 | 16.9 | 2.4 | 1.2 | 6.8 | 5.3 | 4.8 | 158 | 3.1 |
| Example 3 | 1.2M LiFSI | DME:30 | HFE2:70 | - | glutaronitrile | 0.5 | - | - | 1.4 | 17.0 | 2.5 | 1.2 | 6.9 | 5.6 | 4.8 | 159 | 3.2 |
| Example 4 | 1.2M LiFSI | DME:30 | HFE2:70 | - | 1,3,6-hexanetricarbonyl | 0.5 | - | - | 1.4 | 17.0 | 2.5 | 1.2 | 6.8 | 5.5 | 4.6 | 161 | 3.1 |
| Example 5 | 1.2M LiFSI | DME:30 | HFE2:70 | - | succinonitrile | 0.04 | - | - | 1.4 | 17.0 | 2.5 | 0.10 | 6.9 | 5.7 | 4.7 | 158 | 3.4 |
| Example 6 | 1.2M LiFSI | DME:30 | HFE2:70 | - | succinonitrile | 3.00 | - | - | 1.4 | 18.0 | 2.6 | 7.8 | 6.8 | 5.4 | 4.6 | 160 | 2.9 |
| Example 7 | 1.2M LiFSI | DEE:30 | HFE2:70 | - | succinonitrile | 0.5 | - | - | 1.4 | 16.9 | 2.4 | 1.2 | 6.7 | 5.3 | 4.4 | 165 | 2.7 |
| Example 8 | 1.2M LiFSI | DMP:30 | HFE2:70 | - | succinonitrile | 0.5 | - | - | 1.4 | 16.9 | 2.4 | 1.2 | 6.8 | 5.3 | 4.6 | 160 | 2.9 |
| Example 9 | 1.2M LiFSI | DME:30 | HFE1:70 | - | succinonitrile | 0.5 | - | - | 1.5 | 16.9 | 2.4 | 1.2 | 6.8 | 5.3 | 4.6 | 165 | 2.8 |
| Example 10 | 1.2M LiFSI | DME:30 | HFE2:60 | HC1:10 | succinonitrile | 0.3 | 1 | ○ | 1.2 | 16.9 | 2.4 | 0.7 | 7.0 | 5.7 | 5.3 | 167 | 2.5 |
| Example 11 | 1.2M LiFSI | DME:30 | HFE2:60 | HC2:10 | succinonitrile | 0.3 | 1 | ○ | 1.2 | 16.8 | 2.4 | 0.7 | 7.0 | 5.8 | 5.2 | 163 | 2.6 |
| Example 12 | 1.2M LiFSI | DME:30 | HFE2:60 | HC3:10 | succinonitrile | 0.3 | 1 | ○ | 1.2 | 16.9 | 2.4 | 0.7 | 7.0 | 5.7 | 5.3 | 160 | 2.6 |
| Comparative Example 2 | 1.2M LiFSI | DME:30 | HFE2:70 | - | - | 0 | - | - | 1.4 | 17.2 | 2.5 | 0.0 | 6.8 | 5.5 | 4.5 | 155 | 7.4 |
| Comparative Example 3 | 4.0M LiFSI | DME:100 | - | - | succinonitrile | 0.5 | - | - | 1.4 | 16.9 | 2.4 | 1.2 | 6.8 | 5.3 | 0.1 | 105 | 12.7 |
| Comparative Example 4 | 1.2M LiFSI | - | HFE2:100 | - | succinonitrile | 0.5 | | In salt and insoluble | - | - | - | - | - | - | - | - | - |
| Experimental Example 1 | 1.2M LiFSI | DME:30 | HFE2:70 | - | succinonitrile | 3.00 | - | - | 1.4 | 23.0 | 3.3 | 10.0 | 6.5 | 2.5 | 2.0 | 90 | 3.0 |
| Experimental Example 2 | 1.2M LiFSI | DME:30 | HFE2:70 | - | succinonitrile | 0.04 | - | - | 1.4 | 11.0 | 1.6 | 0.06 | 6.1 | 3.5 | 0.6 | 110 | 5.4 |

| Example Comparative Example | Electrolyte solution composition | | | | | | Number of substituents (compound of Formula (1)) | Presence or absence of compatibility | Specific gravity of electrolyte solution (g/cc) | Liquid injection amount (9) | Liquid injection amount A (g/Ah) | B x A | Discharge capacity (Ah) | | | Number of cycles | Volume increase at 60°C and 7th day (ml) |
|---|---|---|---|---|---|---|---|---|---|---|---|---|---|---|---|---|---|
| | Lithium salt | Organic solvent 1 | Organic solvent 2 | Compound of Formula (1) | Additive | Additive 1 Adding amount B (%) | | | | | | | 25°C (0.1C) | 25°C (5C) | -30°C (0.1C) | | |
| Comparative Example 1 | 1.0M LiPF6 | DMC 30 | EC:70 | - | succinonitrile | 0.5 | - | - | 1.2 | 17.0 | 2.5 | 1.2 | 6.3 | 4.4 | 3.2 | 43 | 21.6 |

**In** Table 1, the symbol "-" in the electrolyte solution composition means that the corresponding component is not contained, the symbol "-" in the number of substituents means that the compound of Formula (1) is not used, and the symbol "-" in the specific gravity of the electrolyte solution, the liquid injection amount, the liquid injection amount/battery capacity, B x A, the discharge capacity, the number of cycles, and the volume increase means that the measurement is not carried out.

### 1.3. Evaluation result

From Table 1, it can be seen that Examples 1 to 12 in which an electrolyte solution containing an ether having no fluorine atom, a hydrofluoroether, an additive which is a compound having a cyano group, and lithium bis(fluorosulfonyl)imide is used in a lithium secondary battery exhibit favorable cycle characteristics, favorable storage stability at a high temperature, and excellent charging/discharging characteristics as compared with comparative examples in which an electrolyte solution other than the above is used in a lithium secondary battery.

**In** addition, when Experimental Examples 1 and 2 of Table 1 and Examples 6 and 5 of Table 1 are compared with each other, it can be seen that when the liquid injection amount is adjusted so that the product B x A is within a predetermined range in the electrolyte solution according to the present embodiment, the performance of the battery can be further improved.

### 2. Lithium metal battery

Next, the lithium metal battery was examined.

### 2.1. Production of lithium metal battery

A lithium metal battery (LMB) of Example 13 was produced as follows.

### 2.1.1. Preparation of negative electrode

First, a clad material in which a Li foil having a thickness of 20.0 µm was joined to both surfaces of an electrolytic Cu foil having a thickness of 8.0 µm was prepared, and punched into a predetermined size (105 mm x 55 mm).

### 2.1.2. Production of positive electrode

Next, a positive electrode was produced. A mixture of 96 parts by mass of LiNi_{0.85}Co_{0.12}Al_{0.03}O₂ as a positive-electrode active material, 2.0 parts by mass of carbon black as a conductive auxiliary agent, and 2.0 parts by mass of polyvinylidene fluoride (PVDF) as a binder was applied to both surfaces of a 12 µm-thick Al foil and press-molded. The molded product thus obtained was punched to a predetermined size (100 mm x 50 mm) to obtain a positive electrode having a positive electrode current collector. In addition, the obtained positive electrode had a weight per unit area of 18 mg/cm².

### 2.1.3. Preparation of separator

A separator obtained by coating 2.0-µm polyvinylidene fluoride (PVDF) on both surfaces of a 12-µm polyethylene microporous membrane and having a predetermined size (108 mm x 58 mm) was prepared.

### 2.1.4. Preparation of electrolyte solution

An electrolyte solution was prepared as follows. Three kinds of solvents were mixed so that methylcyclohexane was 10% by volume, 1,1,2,2-tetrafluoroethyl-2,2,3,3-tetrafluoropropyl ether was 60% by volume, and 1,2-dimethoxyethane was 30% by volume. LiN(SO₂F)₂ was dissolved in the obtained mixed solution so that the molar concentration thereof was 1.2 M. Further, succinonitrile was dissolved as the additive so that the content thereof was 0.50 parts by mass when the total mass of the electrolyte solution excluding the additive was set to 100 parts by mass. **In** this way, an electrolyte solution was obtained.

### 2.1.5. Assembly of battery

The punched separator, the positive electrode, and the negative electrode were laminated in the order of separator/negative electrode/separator/positive electrode/separator/.../positive electrode/separator/negative electrode/separator so that the number of positive electrodes, the number of negative electrode current collector foils, and the number of separators were 20, 21, and 42, respectively. Thereafter, an aluminum tab having a thickness of 0.2 mm was joined by ultrasonic welding to the uncoated part of the positive-electrode active material of the laminated positive electrode, and a copper/nickel tab was individually joined to the negative electrode by ultrasonic welding. Thereafter, while measuring the weight with an electronic balance, the electrolyte solution was injected until the amount of the electrolyte solution reached the value shown in Table 3, and vacuum sealing was carried out under reduced pressure of -50 kPa to obtain a lithium secondary battery.

A lithium metal battery of Comparative Example 5 was obtained in the same manner as in Example 13, except that the electrolyte solution was adjusted using the solvent shown in Table 2.

**It** is noted that, in Table 2, each column indicates the same items as those in Table 1.

### 2.2. Evaluation

The compatibility, the discharge capacity at 25°C (0.1 C), the discharge capacity at -30°C (0.1 C), and the volume increase were evaluated in the same manner as in the evaluation method in Table 1. **In** addition, the capacity retention rate at the 100th cycle was measured as follows.

**In** addition, using the produced lithium secondary battery of each of the examples and the comparative examples, in an environment of a temperature of 25°C, initial charging was carried out at a current of 0.7 A until the voltage reached 4.2 V, and then initial discharging was carried out at a current of 0.7 A until the voltage reached 3.0 V. Next, in an environment of a temperature of 25°C, a cycle (first cycle) in which CC charging was carried out at a current of 1.4 A until the voltage reached 4.2 V and then CC discharging was carried out at a current of 3.5 A until the voltage reached 3.0 V was carried out. Subsequently, the cycle was carried out 99 times, and a total of 100 cycles were repeated. For the examples and the comparative examples, the capacity retention rate was determined by dividing the capacity determined from the CC discharging at the 100th cycle by the capacity determined from the CC discharging at the first cycle, and this value was defined as the capacity retention rate at the 100th cycle.

**[Table 2]**

| Example Comparative Example | Electrolyte solution composition | | | | | | Number of substituents (compound of Formula (1)) | Presence or absence of compatibility | Specific gravity of electrolyte solution (g/cc) | Liquid injection amount (9) | Liquid injection amount A (g/Ah) | BxA | Discharge capacity (Ah) | | Capacity retention rate at 100th cycle | Volume increase at 60°C and 7th day (ml) |
|---|---|---|---|---|---|---|---|---|---|---|---|---|---|---|---|---|
| | Lithium salt | Organic solvent 1 | Organic solvent 2 | Compound of Formula (1) | Additive | Additive 1 Adding amount B (%) | | | | | | | 25°C (0.1C) | -30°C (0.1C) | | |
| Example 13 | 1.2M LiFSI | DME:30 | HFE2:60 | HC2:10 | succinonitrile | 0.5 | - | ○ | 1.3 | 16.9 | 2.4 | 1.2 | 6.4 | 4.5 | 99.1 | 2.8 |
| Comparative Example 5 | 1.2M LiFSI | DME:30 | HFE2:60 | - | - | 0 | - | - | 1.4 | 17.0 | 2.5 | 0.0 | 6.3 | 4.1 | 94.6 | 7.7 |

### 2.3. Evaluation result

From Table 2, it can be seen that Example 13 in which an electrolyte solution containing an ether having no fluorine atom, a hydrofluoroether, an additive which is a compound having a cyano group, and lithium bis(fluorosulfonyl)imide is used in a lithium metal battery exhibit favorable cycle characteristics, favorable storage stability at a high temperature, and excellent charging/discharging characteristics as compared with Comparative Example 5 in which an electrolyte solution other than the above is used in a lithium metal battery.

### 3. Example in which additive which is compound containing cyano group and having unsaturated bond between carbon atoms is used

### 3.1. Anode-free type lithium metal battery

Next, an anode-free type lithium metal battery in which a compound having a cyano group and having an unsaturated bond between carbon atoms was used as an additive was examined.

An anode-free type lithium metal battery was obtained in the same manner as in Example 1, except that the electrolyte solution was adjusted using the solvent shown in Table 3. **It** is noted that, in Table 3, each column indicates the same items as those in Table 1.

**[Table 3]**

| Example Comparative Example | Electrolyte solution composition | | | | | | Number of substituents (compound of Formula (1)) | Presence or absence of compatibility | Specific gravity of electrolyte solution (g/cc) | Liquid injection amount (9) | Liquid injection amount A (g/Ah) | BxA | Discharge capacity (Ah) | | | Number of cycles | Volume increase at 60°C and 7th day (ml) |
|---|---|---|---|---|---|---|---|---|---|---|---|---|---|---|---|---|---|
| | Lithium salt | Non-fluorinated ether | HFE | Compound of Formula (1) | Additive | Additive Adding amount B (%) | | | | | | | 25°C (0.1C) | 25°C (5C) | -30°C (0.1C) | | |
| Example 14 | 1.2M LiFSI | DME:30 | HFE2:70 | - | tetracyanoethylene | 0.5 | - | - | 1.4 | 16.8 | 2.4 | 1.2 | 7.0 | 5.3 | 5.1 | 165 | 1.9 |
| Example 15 | 1.2M LiFSI | DME:30 | HFE2:70 | - | isopropylidene malononitrile | 0.5 | - | - | 1.4 | 17.0 | 2.5 | 1.2 | 6.9 | 5.3 | 5.2 | 164 | 2.0 |
| Example 16 | 1.2M LiFSI | DME:30 | HFE2:70 | - | fumaronitrile | 0.5 | - | - | 1.4 | 16.9 | 2.4 | 1.2 | 6.9 | 5.6 | 5.2 | 169 | 2.1 |
| Example 17 | 1.2M LiFSI | DME:30 | HFE2:70 | - | 3-hexenedinitrile | 0.5 | - | - | 1.4 | 17.1 | 2.5 | 1.2 | 6.8 | 5.5 | 5.0 | 167 | 2.3 |
| Example 18 | 1.2M LiFSI | DME:30 | HFE2:70 | - | fumaronitrile | 0.04 | - | - | 1.4 | 16.9 | 2.4 | 0.10 | 6.8 | 5.7 | 5.0 | 164 | 2.6 |
| Example 19 | 1.2M LiFSI | DME:30 | HFE2:70 | - | fumaronitrile | 3.00 | - | - | 1.4 | 17.9 | 2.6 | 7.8 | 6.8 | 5.4 | 5.0 | 164 | 2.4 |
| Example 20 | 1.2M LiFSI | DEE:30 | HFE2:70 | - | fumaronitrile | 0.5 | - | - | 1.4 | 16.8 | 2.4 | 1.2 | 6.8 | 5.3 | 4.9 | 172 | 2.2 |
| Example 21 | 1.2M LiFSI | DMP:30 | HFE2:70 | - | fumaronitrile | 0.5 | - | - | 1.4 | 16.9 | 2.4 | 1.2 | 6.7 | 5.3 | 4.9 | 167 | 2.3 |
| Example 22 | 1.2M LiFSI | DME:30 | HFE1:70 | - | fumaronitrile | 0.5 | - | - | 1.5 | 16.8 | 2.4 | 1.2 | 6.7 | 5.3 | 5.0 | 170 | 2.2 |
| Example 23 | 1.2M LiFSI | DME:30 | HFE2:60 | HC1:10 | fumaronitrile | 0.3 | 1 | ○ | 1.2 | 16.9 | 2.4 | 0.7 | 7.1 | 5.7 | 6.0 | 174 | 2.0 |
| Example 24 | 1.2M LiFSI | DME:30 | HFE2:60 | HC2:10 | fumaronitrile | 0.3 | 1 | ○ | 1.2 | 16.8 | 2.4 | 0.7 | 7.1 | 5.8 | 5.8 | 170 | 2.1 |
| Example 25 | 1.2M LiFSI | DME:30 | HFE2:60 | HC3:10 | fumaronitrile | 0.3 | 1 | ○ | 1.2 | 16.8 | 2.4 | 0.7 | 7.1 | 5.7 | 5.7 | 166 | 2.1 |
| Comparative Example 7 | 1.2M LiFSI | DME:30 | HFE2:70 | - | - | 0 | - | - | 1.4 | 17.2 | 2.5 | 0.0 | 6.8 | 5.5 | 4.5 | 155 | 7.2 |
| Comparative Example 8 | 1.2M LiFSI | DME:30 | HFE2:70 | - | succinonitrile | 0.5 | - | - | 1.4 | 16.9 | 2.4 | 1.2 | 6.9 | 5.3 | 4.8 | 162 | 2.9 |
| Comparative Example 9 | 1.2M LiFSI | DME:30 | HFE2:70 | - | adiponitrile | 0.5 | - | - | 1.4 | 16.9 | 2.4 | 1.2 | 6.8 | 5.3 | 4.8 | 158 | 3.1 |
| Comparative Example 10 | 4.0M LiFSI | DME:100 | - | - | fumaronitrile | 0.5 | - | - | 1.4 | 16.9 | 2.4 | 1.2 | 6.8 | 5.3 | 0.1 | 113 | 10.3 |
| Comparative Example 11 | 1.2M LiFSI | - | HFE2 100 | - | fumaronitrile | 0.5 | - | In salt and insoluble | - | - | - | - | - | - | - | - | - |
| Experimental Example 3 | 1.2M LiFSI | DME:30 | HFE2:70 | - | fumaronitrile | 3.00 | - | - | 1.4 | 23.0 | 3.3 | 10.0 | 6.6 | 2.5 | 2.3 | 98 | 2.7 |
| Experimental Example 4 | 1.2M LiFSI | DME:30 | HFE2:70 | - | fumaronitrile | 0.04 | - | - | 1.4 | 8.0 | 1.2 | 0.05 | 6.2 | 3.7 | 1.2 | 118 | 5.0 |

| Example Comparative Example | Electrolyte solution composition | | | | | | Number of substituents (compound of Formula (1)) | Presence or absence of compatibility | Specific gravity of electrolyte solution (g/cc) | Liquid injection amount (9) | Liquid injection amount A (g/Ah) | BxA | Discharge capacity (Ah) | | | Number of cylces | Volume increase at 60°C and 7th day (ml) |
|---|---|---|---|---|---|---|---|---|---|---|---|---|---|---|---|---|---|
| | Lithium salt | Organic solvent 1 | Organic solvent 2 | Compound of Formula (1) | Additive | Additive Adding amount B (%) | | | | | | | 25°C (0.1C) | 25°C (5C) | -30°C (0.1C) | | |
| Comparative Example 6 | 1.0M LiPF6 | DMC:30 | EC:70 | - | fumaronitrile | 0.5 | - | - | 1.2 | 17.0 | 2.5 | 1.3 | 6.3 | 4.4 | 3.2 | 43 | 21.6 |

From Table 3, it can be seen that Examples 14 to 25 in which an electrolyte solution containing an ether having no fluorine atom, a hydrofluoroether, an additive which is a compound containing a cyano group and having an unsaturated bond between carbon atoms, and lithium bis(fluorosulfonyl)imide is used in a lithium secondary battery exhibit favorable cycle characteristics, favorable storage stability at a high temperature, and excellent charging/discharging characteristics as compared with comparative examples in which an electrolyte solution other than the above is used in a lithium secondary battery.

**In** addition, when Experimental Examples 3 and 4 are compared with Examples 19 and 18, it can be seen that when the liquid injection amount is adjusted so that the product B x A is within a predetermined range in the electrolyte solution according to the present embodiment, the performance of the battery can be further improved.

### 3.2. Lithium metal battery

Next, an anode-free type lithium metal battery in which a compound having a cyano group and having an unsaturated bond between carbon atoms was used as an additive was examined.

An anode-free type lithium metal battery was obtained in the same manner as in Table 2, except that the electrolyte solution was adjusted using the solvent shown in Table 4. **It** is noted that, in Table 4, each column indicates the same items as those in Table 2.

**[Table 4]**

| Example Comparative Example | Electrolyte solution composition | | | | | | Number of substituents (compound of Formula (1)) | Presence or absence of compatibility | Specific gravity of electrolyte solution (g/cc) | Liquid injection amount (9) | Liquid injection amount A (g/Ah) | BxA | Discharge capacity (Ah) | | Capacity retention rate at 100th cycle | Volume increase at 60°C and 7th day (ml) |
|---|---|---|---|---|---|---|---|---|---|---|---|---|---|---|---|---|
| | Lithium salt | Organic solvent 1 | Organic solvent 2 | Compound of Formula (1) | Additive | Additive 1 Adding amount B (%) | | | | | | | 25°C (0.1C) | -30°C (0.1C) | | |
| Example 26 | 1.2M LiFSI | DME:30 | HFE2:60 | HC2:10 | fumaronitrile | 0.5 | - | ○ | 1.3 | 17.0 | 2.5 | 1.2 | 6.5 | 4.6 | 99.0 | 2.3 |
| Comparative Example 12 | 1.2M LiFSI | DME:30 | HFE2:70 | - | - | 0 | - | - | 1.4 | 17.0 | 2.5 | 0.0 | 6.4 | 4.2 | 94.6 | 7.7 |

From Table 4, it can be seen that Example 26 in which an electrolyte solution containing an ether having no fluorine atom, a hydrofluoroether, an additive which is a compound containing a cyano group and having an unsaturated bond between carbon atoms, and lithium bis(fluorosulfonyl)imide is used in a lithium metal battery exhibits favorable cycle characteristics, favorable storage stability at a high temperature, and excellent charging/discharging characteristics as compared with Comparative Example 12 in which an electrolyte solution other than the above is used in a lithium metal battery.

### Industrial Applicability

The lithium secondary battery created by using the electrolyte solution of the present invention has excellent cycle characteristics, and therefore, it has industrial applicability as an electrolyte solution for a power storage device to be used in various use applications.

### Reference Signs List

100: lithium secondary battery
110: positive electrode current collector
120: positive electrode
130: separator
140: negative electrode

## Claims

1. An electrolyte solution for a lithium secondary battery, comprising:
an ether having no fluorine atom;
a hydrofluoroether;
an additive which is a compound having a cyano group; and
lithium bis(fluorosulfonyl)imide.

2. The electrolyte solution according to Claim 1,
wherein the compound containing a cyano group is at least one selected from the group consisting of adiponitrile, succinonitrile, glutaronitrile, and 1,3,6-hexanetricarbonitrile.

3. The electrolyte solution according to Claim 1,
wherein the compound containing a cyano group is a compound containing a cyano group and having an unsaturated bond between carbon atoms.

4. The electrolyte solution according to Claim 3,
wherein the compound containing a cyano group and having an unsaturated bond between carbon atoms is at least one selected from the group consisting of tetracyanoethylene, isopropylidene malononitrile, fumaronitrile, and 3-hexenedinitrile.

5. The electrolyte solution according to Claim 1,
wherein a product (A x B) of a value A (g/Ah) obtained by dividing an amount (g) of the electrolyte solution injected into a battery by a battery capacity (Ah) and a content B (parts by mass) of the additive with respect to 100 parts by mass of the electrolyte solution is 0.10 or more and 9.5 or less.

6. The electrolyte solution according to Claim 1,
wherein the ether having no fluorine atom includes at least one selected from the group consisting of 1,2-dimethoxyethane, 1,2-diethoxyethane, and 1,2-dimethoxypropane.

7. The electrolyte solution according to Claim 1,
wherein the hydrofluoroether includes a chain-like fluorine compound having at least one of a monovalent group represented by Formula (A) or Formula (B), 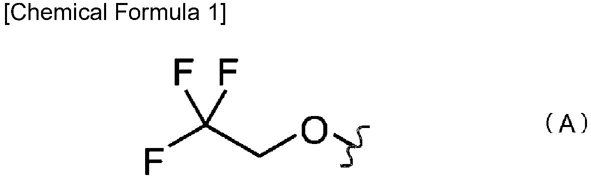 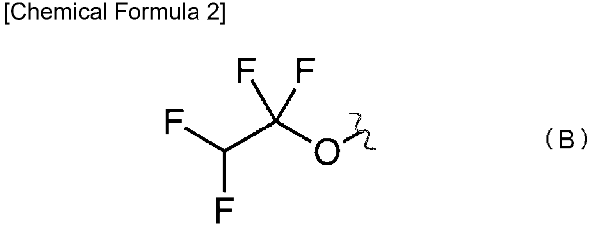 (in Formulae (A) and (B), a wavy line represents a bonding site in the monovalent group).

8. The electrolyte solution according to Claim 1, further comprising:
a cyclic compound represented by Formula (1), 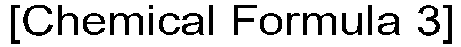 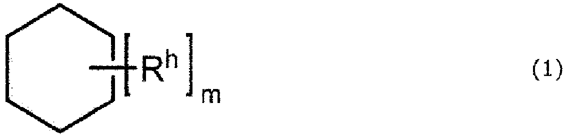 (in Formula (1), m is an integer of 0 or more and 3 or less, and R^{h} is a monovalent saturated hydrocarbon group having 1 or more and 10 or less carbon atoms).

9. The electrolyte solution according to Claim 8,
wherein the cyclic compound includes at least one selected from the group consisting of cyclohexane, methylcyclohexane, and ethylcyclohexane.

10. A lithium secondary battery comprising:
the electrolyte solution according to any one of Claims 1 to 9,
wherein charging/discharging is carried out by depositing a lithium metal on a surface of a negative electrode and dissolving the deposited lithium metal.

11. The lithium secondary battery according to Claim 10, further comprising, as a positive-electrode active material:
Li_{z}NiₓCo_{y}M_{1-x-y}O_{2+α} (here, 0.5 ≤ x ≤ 1.0, 0 ≤ y ≤ 0.35, 0.9 ≤ z ≤ 1.3, -0.2 ≤ a ≤ 0.15, and M is at least one element selected from Mn, Al, V, Mg, Mo, Nb, Ti, Zr, Fe, Cu, Cr, Zn, F, and B).
